**Europäisches Patentamt**

**European Patent Office**

**Office européen des brevets**

(11) **EP 1 113 191 B1**

(12) **EUROPÄISCHE PATENTSCHRIFT**

(45) Veröffentlichungstag und Bekanntmachung des Hinweises auf die Patenterteilung:
**03.05.2006 Patentblatt 2006/18**

(51) Int Cl.:
*F16H 21/04* *(2006.01)*

(21) Anmeldenummer: **00127700.3**

(22) Anmeldetag: **18.12.2000**

(54) **Bewegungsübertragungsvorrichtung**

Motion transmitting device

Dispositif pour la transmission d'un mouvement

(84) Benannte Vertragsstaaten:
**AT BE CH CY DE DK ES FI FR GB GR IE IT LI LU MC NL PT SE TR**

(30) Priorität: **22.12.1999 DE 19962247**

(43) Veröffentlichungstag der Anmeldung:
**04.07.2001 Patentblatt 2001/27**

(73) Patentinhaber: **AGIE SA**
**6616 Losone (CH)**

(72) Erfinder:
• **Bottinelli, Stefano, Ing. ETS**
**6854 S. Pietro (CH)**

• **Henein, Simon, Ing. EPF**
**2000 Neuchatel (CH)**
• **Aymon, Cédric, Ing. EPF**
**1966 Ayent (CH)**
• **Clavel, Reymond, Prof. Dr.**
**1041 Oulens-sous-Echallens (CH)**

(74) Vertreter: **Niederkofler, Oswald et al**
**Samson & Partner**
**Widenmayerstrasse 5**
**80538 München (DE)**

(56) Entgegenhaltungen:
**EP-A- 0 937 961        CH-A- 672 089**
**DE-A- 3 721 682        US-A- 4 559 717**
**US-A- 4 888 878**

**Beschreibung**

Die vorliegende Erfindung betrifft eine Bewegungsübertragungsvorrichtung zum Übertragen von wenigstens zwei eingangsseitigen Bewegungskomponenten mit jeweils einem Bewegungsfreiheitsgrad in eine ausgangsseitige Bewegung mit wenigstens zwei Bewegungsfreiheitsgraden oder umgekehrt, welche pro eingangsseitigem Bewegungsfreiheitsgrad eine Übertragungseinheit umfaßt, wobei diese Übertragungseinheiten über ihre jeweiligen Ausgangsabschnitte funktionell parallel miteinander gekoppelt sind, jede Übertragungseinheit einen festlegbaren ersten Abschnitt und als Eingangsabschnitt einen an diesem ersten Abschnitt über ein erstes Gelenkmittel angelenkten zweiten Abschnitt umfaßt, der in Richtung des entsprechenden Bewegungsfreiheitsgrads der Übertragungseinheit beweglich angelenkt ist, wobei der zweite Abschnitt so ausgebildet ist, daß er über ein zweites Gelenkmittel ausgangsseitig eine freie Bewegung entlang der Bewegungsfreiheitsgrade der anderen Übertragungseinheiten zuläßt.

Die Erfindung betrifft ferner eine Bewegungsübertragungsvorrichtung zum Übertragen von drei eingangsseitigen Bewegungskomponenten mit jeweils einem Bewegungsfreiheitsgrad in eine ausgangsseitige Bewegung mit drei Bewegungsfreiheitsgraden oder umgekehrt, welche drei Übertragungseinheiten mit jeweils einem Eingangs- und einem Ausgangsabschnitt umfaßt, die über ihre Ausgangsabschnitte funktionell parallel miteinander gekoppelt sind, jede Übertragungseinheit eine Erstreckungsrichtung von ihrem jeweiligen Eingangsabschnitt zu ihrem jeweiligen Ausgangsabschnitt aufweist und als Biegegelenke ausgebildete Gelenkmittel derart umfaßt, daß ihr jeweiliger Ausgangsabschnitt freie Bewegungen senkrecht zu ihrer Erstreckungsrichtung zuläßt, wobei die Eingangsabschnitte der Übertragungseinheiten derart ausgestaltet sind, daß die jeweilige eingangsseitige Bewegung in einem Winkel zur Erstreckungsrichtung eingeleitet wird.

Die erstgenannte gattungsgemäße Bewegungsübertragungsvorrichtung entsprechend den Oberbegriff des Anspruchs 1 ist beispielsweise aus dem CH-Patent 672089 bekannt, das eine Positioniervorrichtung mit einer solchen Bewegungsübertragungsvorrichtung beschreibt. Diese Bewegungsübertragungsvorrichtung weist drei funktionell parallel geschaltete Übertragungseinheiten auf, die zusammen ein Positionieren eines Ausgangsteils der Positioniervorrichtung in drei Bewegungsfreiheitsgraden gestattet. Die Positioniervorrichtung umfaßt pro Übertragungseinheit eine feste Basis mit einem Aktuator, der einen beweglichen Abschnitt der Bewegungsübertragungsvorrichtung antreibt. Der bewegliche Abschnitte wiederum weist seinerseits jeweils zwei mittels eines Gestänges verbundene Kardangelenke auf und ist über diese mit dem beweglichen Ausgangsteil der Bewegungsübertragungsvorrichtung verbunden. Insgesamt schwenkt der Aktuator jeder Übertragungseinheit seinen zugehörigen beweglichen Abschnitt um eine entsprechende drehbar gelagerte Schwenkachse. Die beiden über ein Gestänge miteinander verbundenen Kardangelenke der beweglichen Abschnitte erlauben dabei eine Bewegung jeder Übertragungseinheit in Richtung der Schwenkbewegung der anderen beiden Übertragungseinheiten. Insgesamt macht das bewegliche Ausgangsteil dieser Bewegungsübertragungsvorrichtung eine Bewegung im Raum, bei welcher die Neigung und Orientierung dieses Ausgangsteils unverändert bleibt, wie auch immer die drei Übertragungseinheiten angetrieben werden. Aufgrund der Ausgestaltung mit Drehachsen und Kardangelenken eignet sich diese Bewegungsübertragungsvorrichtung jedoch nur bedingt für Präzisionsarbeiten, da diese Gelenkarten nur mit großem technischen Aufwand mit dem hierfür erforderlichen Minimum an Bewegungsspiel gefertigt werden können.

Die zweitgenannte gattungsgemäße Bewegungsübertragungsvorrichtung entsprechend den Oberbegriff des Anspruchs 25 ist beispielsweise aus der DE 37 21 682 A1 bekannt. Diese Druckschrift zeigt in einer Ausführungsform eine Bewegungsübertragungsvorrichtung mit drei Übertragungseinheiten, die eingangsseitig jeweils mit einer zur Erstreckungsrichtung der jeweiligen Übertragungseinheit unter einem Winkel verlaufenden Linear- oder Planarbewegung beaufschlagt werden. Die Übertragungseinheiten bestehen jeweils aus einem Tragarm, der über je ein Festkörpergelenk, beispielsweise ein Filmscharnier, mit dem Eingangs- und dem Ausgangsabschnitt der jeweiligen Übertragungseinheit gekoppelt ist. Die drei Übertragungseinheit sind über ihre Ausgangsabschnitte miteinander gekoppelt. Mit der speziellen Ausgestaltung der Übertragungseinheiten, insbesondere der Festkörpergelenke, sind jedoch Verstellbewegungen im Mikrometerbereich nicht genügend genau einstellbar und weisen ein zu starkes Spiel bzw. Lose auf.

Die EP 0 937 961 A2 zeigt einen Mechanismus für eine mehrachsige Positioniervorrichtung, die einen festen und einen beweglichen Abschnitt aufweist, die pro Achse über eine Übertragungseinheit zum Übertragen der Kraft auf das bewegliche Teil miteinander verbunden sind. Die Übertragungseinheiten weisen ein aus zwei parallelen Stangen bestehendes flexibles Mittel auf, das pro Stange jeweils zwei Biegeabschnitte umfaßt. Hierzu bestehen die Stangen jeweils aus Hohlrohren, die an den Biegeabschnitten unterbrochen sind und dort ein Klavierdraht eingeschoben ist. Die Übertragungseinheiten übertragen die Kraft entlang ihrer Erstreckungsachseauf das bewegliche Teil und lassen eine freie Bewegung senkrecht zu ihrer Erstrekkungsrichtung bzw. entlang der Achsen der anderen Übertragungseinheiten zu.

Aus dem US-Patent 4,888,878 ist ferner eine Positioniervorrichtung mit einer Bewegungsübertragungsvorrichtung bekannt, die in der Lage ist drei oder mehrere Bewegungsfreiheitsgrade anzusteuern. Hierzu weist die Bewegungsübertragungsvorrichtung mehrere funktionell seriell geschaltete Übertragungseinheiten auf, von denen jede über ihren Ausgang mit dem Eingang einer nächsten Übertragungseinheit gekoppelt ist. Die in der Kette zuerst liegende Übertragungseinheit ist mit einer festen Basis und die in der Kette zuletzt liegende Übertragungseinheit mit dem angesteuerten Ausgang der Bewegungsübertragungsvorrichtung gekoppelt. Jede Übertragungseinheit weist ein Antriebsmittel auf, das einen beweglichen zweiten Abschnitt bezüglich eines "festen" Abschnitts antreibt. Der bewegliche zweite Abschnitt ist mit dem "festen" Abschnitt über Biegegelenke gekoppelt. Der Nachteil dieser Bewegungsübertragungsvorrichtung liegt darin, daß aufgrund seines seriellen Aufbaus jede Übertragungseinheit mit dem Gesamtgewicht der nachfolgenden Übertragungseinheiten belastet ist, wodurch vor allem die Dynamik aber auch sonstige Eigenschaften nachteilig verschlechtert werden.

Der Erfindung liegt die Aufgabe zugrunde, die gattungsgemäßen Bewegungsübertragungsvorrichtungen mit ihrer funktionell parallelen Kinematik dahingehend weiterzuentwickeln, daß sie Präzisionsbewegungen ermöglichen.

Die Erfindung löst diese Aufgabe mit den Gegenständen der Ansprüche 1 und 25. Weitere bevorzugte Ausführungsbeispiele der Erfindung sind in den Unteransprüchen beschrieben.

Nach Anspruch 1 sind bei einer gattungsgemäßen ersten Bewegungsübertragungsvorrichtung das erste und das zweite Gelenkmittel als Biegegelenk ausgebildet, und der zweite Abschnitt, das zweite Gelenkmittel und der Ausgangsabschnitt sind derart ausgebildet, daß sie zusammen entlang des eingangsseitigen Bewegungsfreiheitsgrads der zugehörigen Übertragungseinheit eine steife Struktur bilden. Hierbei wird insbesondere die dem Eingangsabschnitt (dem zweiten Abschnitt) aufgeprägte eingangsseitige Bewegung präzise an den Ausgang übertragen. Der Hauptvorteil in der Verwendung von Biegegelenken gegenüber Gleitlagern oder Wälzlagern als Gelenkmittel ist das Fehlen von Reibung, Abnutzung, mechanischem Spiel und die Unanfälligkeit gegenüber Verschmutzung. Ferner kann abhängig von dem gewählten Gesamtaufbau einer Übertragungseinheit eine hohe mechanische Steifigkeit der Bewegungsübertragungsvorrichtung erzielt werden, was insbesondere für Präzisionsbewegungen zwingend erforderlich ist. Insgesamt können mit einer solchen Bewegungsübertragungsvorrichtung Positionierungen des Ausgangsabschnittes beispielsweise im Bereich von 1/100 μm für Gesamtverfahrwege von etwa +/-1mm pro Richtung erzielt werden.

Unter einem Biegegelenk soll jede Art elastischen Gelenks verstanden werden, wie beispielsweise bestimmte Anordnungen unterschiedlich elastischer Materialien, etc. (siehe auch weiter unten). Ein solches Biegegelenk kann dabei unterschiedliche Bewegungsarten durchführen, beispielsweise eine Schwenkbewegung, eine Torsionsbewegung oder eine axiale Bewegung (Stauchung bzw. Dehnung). Für eine Zusammenschau spezieller Biegegelenke wird auch auf die in der Figurenbeschreibung im letzten Abschnitt angegebene Veröffentlichung verwiesen, deren Offenbarung durch Bezugnahme in diese Beschreibung mit aufgenommen ist.

Ferner soll die Bewegungsübertragungsvorrichtung wenigstens so aufgebaut sein, daß sie zwei eingangsseitige Bewegungskomponenten (beispielsweise zwei translatorische Eingangsbewegungen entlang der X- und der Y-Achse) in eine Ausgangsbewegung der Bewegungsübertragungsvorrichtung mit wenigstens zwei gekoppelten Bewegungsfreiheitsgraden, beispielsweise ebenfalls in X- und Y-Richtung überträgt. Hierbei ist jedoch nicht zwingend erforderlich, daß translatorische Bewegungen wiederum in translatorische Bewegungen übersetzt werden müssen. Es können außerdem beliebige Kombinationen von Rotations- und Translationsbewegungen (die Schwenkbewegung wird hier als eine Kombination der Rotations- und der Translationsbewegung angesehen) in eine Ausgangsbewegung umgeformt werden, die ebenfalls unterschiedliche Arten an Bewegungsfreiheiten aufweisen kann (z. B. irgendeine Kombination aus Rotations- und Translationsbewegungen).

Außerdem muß die Umformung nicht im Verhältnis 1:1 erfolgen, d. h. die Anzahl der eingangsseitigen Bewegungsfreiheitsgrade muß nicht zwingend der Anzahl der ausgangsseitigen Bewegungsfreiheitsgrade entsprechen. Dies soll lediglich für den einfachsten Fall von zwei eingangsseitigen Bewegungsfreiheitsgraden gelten, die in eine Ausgangsbewegung mit zwei gekoppelten Bewegungsfreiheitsgraden umgeformt werden. Schließlich muß ein Bewegungsfreiheitsgrad nicht einem reinen Translations- oder Rotationsbewegungsfreiheitsgrad entsprechen. Der Eingangsabschnitt einer Übertragungseinheit kann beispielsweise entsprechend seinem Bewegungsfreiheitsgrad entlang einer komplizierten räumlichen Bahn zwangsgeführt werden.

Die Bewegungsübertragung kann ebenfalls vom Ausgangsabschnitt der Bewegungsübertragungsvorrichtung zu den jeweiligen Eingangsabschnitten der Übertragungseinheiten erfolgen, was besonders vorteilhaft für die nachfolgend beschriebenen Meßvorrichtungen ist.

Unter den einzelnen Abschnitten einer Übertragungseinheit werden bei einer entsprechenden Miniaturisierung der Bewegungsübertragungsvorrichtung auch nur solche Übergangsabschnitte verstanden, welche die beiden Gelenkmittel miteinander koppeln. Bei entsprechender Ausbildung dieser beiden Gelenkmittel können die Grenzen zwischen dem Gelenkmittel und den einzelnen Abschnitten somit ineinander überfließen. Hierin liegt gerade der Vorteil der Erfindung, da bei einer Ausbildung der Gelenkmittel als Biegegelenke eine solche Miniaturisierung spielend möglich ist. Es müssen beispielsweise lediglich die Materialstärken entsprechend dimensioniert werden, um die einzelnen Biegegelenke auszubilden.

Bevorzugt umfaßt die Bewegungsübertragungsvorrichtung drei Übertragungseinheiten zum Übertragen von drei eingangsseitigen Bewegungskomponenten mit jeweils einem translatorischen Bewegungsfreiheitsgrad in eine ausgangsseitige Bewegung mit drei translatorischen Bewegungsfreiheitsgraden. Hiermit ist eine von der Geometrie gesehen einfach anzusteuernde Bewegungsübertragungsvorrichtung geschaffen, welche die räumliche Bewegung ihres Ausgangs in drei Dimensionen ermöglicht. Die drei Bewegungsfreiheitsgrade der eingangsseitigen Bewegungen müssen dabei nicht orthogonal zueinander ausgerichtet sein.

Zum weiteren Erhöhen der Präzision sind die einzelnen Übertragungseinheiten bevorzugt einstückig ausgebildet. Mit anderen Worten werden im wesentlichen alle Abschnitte samt Biegegelenke einer Übertragungseinheit aus einem Stück gefertigt. Abhängig von den unterschiedlichen Präzisionsanforderungen, können einzelne Übertragungseinheiten einer Bewegungsübertragungsvorrichtung einstückig oder mehrstückig ausgebildet sein.

Bevorzugt ist das erste Gelenkmittel und/oder das zweite Gelenkmittel nach Art eines Parallelogramm-Schwenkgelenks ausgebildet, wobei das Parallelogramm-Schwenkgelenk ein Balkenpaar mit jeweils einem Biegegelenk an allen vier Balkenenden umfaßt und die beiden Enden jeweils eines Balkens über die entsprechenden Biegegelenke jeweils mit dem ersten, dem zweiten Abschnitt bzw. dem Ausgangsabschnitt gekoppelt sind. Mit dieser speziellen Ausgestaltung der Gelenkmittel kann die Steifigkeit einer Übertragungseinheit und damit einhergehend die Präzision der gesamten Bewegungsübertragungsvorrichtung weiter erhöht werden.

Bevorzugt sind einzelne oder alle Biegegelenke als Materialeinkerbungen, insbesondere mit kreisförmiger Geometrie ausgebildet. Mit den verschiedenen Einkerbungsformen kann das so ausgebildete Biegegelenk vorteilhaft hinsichtlich der Kerbwirkung (insbesondere können so zu gro-ße Kerbwirkungen am Rand des Biegegelenks vermieden werden), der Materialermüdung, der maximalen Biegeauslenkung, etc. optimiert werden. Kreisförmige Einkerbungen zeichnen sich vorteilhaft durch eine hohe Biegeamplitude aus, da die in den externen Schichten des Biegegelenks auftretenden Zugbeanspruchungen eingeschränkt sind. So ermöglichen beispielsweise kreisförmige Biegegelenke bei einer vorgegebenen Dicke des Biegegelenks an seiner dünnsten Stelle und bei Verwendung geeigneter Materialien mit einem hohen elastischen Materialwert eine maximale Biegeauslenkung von bis zu +/- 10°. Zudem treten bei diesen Biegegelenken keine Belastungskonzentrationen an den Enden der Biegegelenke auf, sie haben eine höhere Kompressionssteifigkeit und ein niedrigeres Bruchrisiko.

Bevorzugt sind die zweiten Gelenkmittel als Doppel-Biegegelenke ausgebildet, wobei ein Doppel-Biegegelenk zwei über ein Belastungsverteilungsmittel funktionell seriell miteinander gekoppelte Biegegelenke umfaßt, die jeweils eine Schwenkbewegung in unterschiedlicher Richtung ermöglichen. Vorteilhaft wird ein solches Doppel-Biegegelenk bei Bewegungsübertragungsvorrichtungen eingesetzt, welche wenigstens drei Übertragungseinheiten umfaßt, d. h. drei eingangsseitige Bewegungen mit jeweils einem unterschiedlichen Bewegungsfreiheitsgrad in eine entsprechende Ausgangsbewegung übertragen. Die Doppel-Biegegelenke zeichnen sich hierbei durch ihren einfachen Aufbau aus, der eine Schwenkbewegung mit zwei unterschiedlichen Bewegungsfreiheitsgraden zuläßt.

Für die leichtere Fertigung einer einstückig ausgebildeten Übertragungseinheit sind diese bevorzugt plattenartig ausgebildet.

Bevorzugt ist in jeder Übertragungseinheit eine mechanische Sperre vorgesehen, welche den Bewegungsbereich des zweiten Abschnitts bezüglich des ersten Abschnitts und/oder des zweiten Abschnitts bezüglich des Ausgangsabschnitts entlang des zugehörigen Bewegungsfreiheitsgrads in beiden Richtungen einschränkt. Vorteilhaft verhindern diese mechanischen Sperren, daß die einzelnen Biegegelenke über ihren maximal zulässigen Biegeauslenkungen hinaus beansprucht werden.

Bevorzugt sind die einzelnen Übertragungseinheiten mittels einer Funkenerosionsbearbeitung, insbesondere einer Draht-Funkenerosionsbearbeitung hergestellt. Dieses spezielle Fertigungsverfahren hat sich insbesondere bei der Ausbildung der einzelnen Biegegelenke als besonders vorteilhaft erwiesen. Insbesondere beim Schneiden einer Übertragungseinheit aus einem Stück sind hierbei das Verhältnis der Spaltbreite zu Spalttiefe vorteilhaft extrem gering und das Schneiden der Spalten äußerst präzis, was zu einem besseren Schutz der Einkerbungen (Biegegelenke) mit einer damit einhergehenden geringeren Kerbwirkung führt.

Bevorzugt sind die beiden Biegegelenke der Doppel-Biegegelenke unter einem bestimmten Winkel zueinander ausgerichtet und jedes der beiden Biegegelenke ist bezüglich der Plattenfläche der zugehörigen Übertragungseinheit um einen bestimmten Winkel verdreht. Dies ist insbesondere vorteilhaft im Zusammenhang mit der Fertigung der Biegegelenke über die Draht-Funkenerosionsbearbeitung. Bei einer solchen Bearbeitung können lediglich Schnitte bis zu einer maximalen Schnittdicke ausgeführt werden. Insofern ist es bei flächenmäßig größer ausgebildeten plattenförmigen Übertragungseinheiten schwierig, Schnitte parallel zur Plattenfläche zu bearbeiten. Mit anderen Worten sind im Prinzip Biegegelenke, die eine Schwenkung senkrecht zur Plattenebene durchführen, über diese Fertigungsverfahren nur schwierig herstellbar. Vorteilhaft werden bei diesem Ausführungsbeispiel nunmehr die Biegegelenke so bezüglich der Plattenebene und zueinander verdreht, daß kein Schnitt parallel zur Plattenebene ausgeführt werden muß.

Dabei ist es für die Beibehaltung der gewünschten Schwenkbewegungen des Ausgangsabschnitts (z.B. senkrecht zur Plattenebene) vorteilhaft, wenn die Doppel-Biegegelenke bevorzugt so dimensioniert sind, daß sie neben der Schwenkbewegung noch eine Torsionsbewegung zulassen. Eine solche minimale Torsionsbewegung tritt nämlich gerade bei der oben angesprochenen Verdrehung der beiden Biegegelenke bezüglich der Plattenfläche auf, wenn diese beispielsweise senkrecht zur Plattenebene geschwenkt werden sollen.

Bevorzugt ist die Masse der beweglichen Teile einer Übertragungseinheit gewichtsmäßig minimiert, damit das dynamische Verhalten vorteilhaft optimiert wird. Hierzu kann insbesondere eine Geometrieoptimierung (z. B. über eine Finite-Elemente-Berechnung) und die Wahl des geeigneten Materials beitragen. Insgesamt würde damit bei der Fertigung kein nennenswerter Mehraufwand entstehen, das dynamische Verhalten könnte indessen nochmals erheblich verbessert werden.

Bevorzugt ist die Bewegungsübertragungsvorrichtung aus einer Titan-Legierung, aus Stahl, aus Edelstahl, aus Aluminium, einer Aluminiumlegierung, einer Titan-Neckel-Legierung, aus Kupfer, einer Kupfer-Legierung, einer Keramik oder einem Kunststoff hergestellt ist. Die Titan-Legierung oder die Keramik begünstigen aufgrund ihres geringen Gewichts und ihrer Steifigkeit insbesondere das dynamische Verhalten und die Präzision der Bewegungsübertragungsvorrichtung. Mit dem Kunststoff können insbesondere kostengünstige Einheiten (beispielsweise in hoher Stückzahl über ein Spritzgußverfahren) gefertigt werden. Kupfer und Kupferlegierungen weisen insbesondere hinsichtlich ihrer Biegefähigkeit eine hohe elastische Grenze auf. Ferner sind sie ebenso wie die Metalle bzw. Metallegierungen aufgrund ihrer elektrischen Leitfähigkeit besonders gut für eine Fertigung über das elektroerosive Verfahren geeignet.

Die Erfindung schafft ferner eine Positioniervorrichtung, die eine erfindungsgemäße Bewegungsübertragungsvorrichtung umfaßt, bei welcher jede Übertragungseinheit über ihren Eingangsabschnitt mit einem Antriebsmittel zum Antreiben dieses Eingangsabschnittes in Richtung des zugehörigen Bewegungsfreiheitsgrades gekoppelt ist.

Bevorzugt ist das Antriebsmittel ein elektromagnetischer Aktuator, ein piezoelekrischer Aktuator oder ein anderer elektromotorischer Präzisionsantrieb zur Erzeugung einer linearen Bewegung, insbesondere gekoppelt mit einem Positionsmeßmittel. Diese speziellen Antriebsmittel zeichnen sich insbesondere durch ihren einfachen Aufbau und ihre hohe Präzision aus. Als besonders geeignet haben sich kontaktlose Antriebsmittel, wie die sog. Voice-Coil-Aktuatoren herausgestellt. Für weitere Details bezüglich dieser Voice-Coil-Aktuatoren wird auf die einschlägige Literatur verwiesen, deren Offenbarung hiermit durch Bezugnahme in die vorliegende Beschreibung mit aufgenommen ist.

Bevorzugt ist die Positioniervorrichtung als Feinpositioniervorrichtung ausgebildet und/oder über die ersten Abschnitte jeder Übertragungseinheit mit einer Makropositioniervorrichtung funktionell seriell gekoppelt. Dank dieser Kopplung sind vorteilhaft große Verfahrbereiche mit einer hohen Positionierauflösung verfügbar. So läßt sich beispielsweise die eingestellte räumliche Position über geeignete Meßmittel sehr genau ermitteln und anschließend über die Feinpositioniervorrichtung entsprechend mikrometergenau korrigieren.

Bevorzugt werden die Antriebsmittel von einem Steuerungsmittel mit Korrekturalgorithmus gesteuert, wobei der Korrekturalgorithmus derart ausgestaltet ist, daß bei Antreiben des Ausgangs der Bewegungsübertragungsvorrichtung entlang einer bestimmten Richtung die aufgrund der Biegegelenke hervorgerufene(n) zwangsgekoppelte(n) Translationsbewegung(en) durch entsprechendes Antreiben einer oder mehrerer anderer Antriebsmittel kompensiert wird bzw. werden. Bei einer bevorzugten Bewegungsart der Biegegelenke, der Schwenkbewegung, findet prinzipiell eine Rotation des angelenkten Teils um eine Rotationsachse statt. Dies gilt auch für die bevorzugten Parallelogramm-Schwenkgelenke, bei denen die Rotation zwar unterdrückt ist, weiterhin aber eine zwangsgekoppelte Bewegungskomponente der Eingangsbewegung orthogonal zur Hauptbewegungskomponente auftritt. Abhängig von der Geometrie des angelenkten Teils resultiert also stets eine Bewegung des angelenkten Teils in zwei zueinander orthogonale Richtungen. Eine dieser beiden "unerwünschten" Bewegungskomponenten kann nunmehr durch eine entsprechende Bewegung einer oder mehrerer anderer Übertragungseinheiten kompensiert werden, die gerade eine Antriebsbewegung ausführen können, welche zumindest eine Bewegungskomponente in diese "unerwünschte" Bewegungskomponente hat.

Bevorzugt ist die Positioniervorrichtung derart im Arbeitsraum ausgerichtet, daß bei einer ausgangsseitigen Bewegung der Bewegungsübertragungsvorrichtung alleinig entlang der in Schwerkraftrichtung ausgerichteten Z-Richtung alle Antriebsmittel im wesentlichen gleich beansprucht sind. Dies kann beispielsweise dadurch erzielt werden, daß bei drei Übertragungseinheiten alle drei Antriebsrichtungen dieser Übertragungseinheiten die letzteren unter dem selben Winkel zur Z-Richtung antreiben. Vorteilhaft können dabei alle Antriebsmittel leistungsmäßig gleich stark ausgebildet sein, d. h. es muß kein Antriebsmittel entsprechend der höheren Belastung entlang der Schwerkraftrichtung stärker dimensioniert werden.

In einem alternativen bevorzugten Ausführungsbeispiel ist die Positioniervorrichtung in diesem Fall jedoch gerade derart im Arbeitsraum ausgerichtet, daß hierbei lediglich ein Antriebsmittel beansprucht ist. Bevorzugt wird das Antriebsmittel für diese Bewegung entlang der Z-Richtung mit einem gegen die Schwerkraft vorgespannten passiven Mittel, insbesondere einem Federmittel funktionell parallel gekoppelt und/oder leistungsmäßig stärker ausgebildet als die übrigen Antriebsmittel.

Gemäß einem weiteren bevorzugten Ausführungsbeispiel ist ferner eine Meßvorrichtung geschaffen, die eine erfindungsgemäße Bewegungsübertragungsvorrichtung umfaßt, wobei der Eingang der Meßvorrichtung der Ausgang der Bewegungsübertragungsvorrichtung ist, bei der die Eingangsabschnitte jeder Übertragungseinheit mit entsprechenden Meßmitteln gekoppelt sind, die eine Positionsmessung entlang des zugehörigen Bewegungsfreiheitsgrads des entsprechenden Eingangsabschnittes ermöglichen. Vorteilhaft wird hiermit insbesondere ein sehr präzises ausmeßbares Meßvolumen beispielsweise in der Größenordnung von einigen mm$^3$ geschaffen. Diese Meßvorrichtung kann beispielsweise vorteilhaft als Meßkopf für eine Koordinaten-Meßmaschine eingesetzt werden.

Die Erfindung betrifft ferner die Verwendung einer solchen Positionier- oder Meßvorrichtung auf dem Gebiet der Werkstückbearbeitung, Funkenerosionsbearbeitung, der elektrochemischen Bearbeitung, der Halbleiterfertigung, der Fertigung von opto-elektronischen Verbindungsbauelementen und Mikrosystemen, der Robotik, als Kraftmesser und/oder Joystick mit Kraftrückführung. Weitere Anwendungsgebiete finden sich beispielsweise in der Medizin (bei Operationen), in der Chemie, bei der Meßmaschinenbedienung, usw. Im Prinzip kann jedes technologische Gebiet Vorteile aus der Erfindung ziehen, bei welchem Fein- bzw. Mikroeinstellungen erforderlich sind, z. B. Werkstücksbearbeitungen, insbesondere Mikroerosionen, Maskenjustierungen bei der Halbleiterproduktion, Justierungen bei der Kontaktherstellung (Bonding) von Chips, etc.

Nach Anspruch 25 sind bei einer gattungsgemäßen zweiten Bewegungsübertragungsvorrichtung die Biegegelenke nach Art von Parallelogramm-Schwenkgelenken ausgebildet, wobei jedes Parallelogramm-Schwenkgelenk ein Balkenpaar mit jeweils einem Biegegelenk an allen vier Balkenenden umfaßt und die beiden Enden jeweils eines Balkens über die entsprechenden Biegegelenke jeweils mit dem Eingangsabschnitt und dem Ausgangsabschnitt gekoppelt sind. Hiermit wird die Steifigkeit einer Übertragungseinheit und damit einhergehend die Präzision der gesamten Bewegungsübertragungsvorrichtung vorteilhaft erhöht. Vorteilhaft hat die ausgangsseitige Bewegung dabei eine Bewegungskomponente entlang eines der drei Bewegungsfreiheitsgraden, deren Verfahrweg gegenüber den Verfahrwegen der Bewegungskomponenten der beiden anderen Bewegungsfreiheitsgraden größer ist.

Bevorzugt sind die Eingangsabschnitte der Übertragungseinheiten derart ausgebildet, daß die jeweiligen eingangsseitigen Bewegungen parallel zueinander eingeleitet werden. Hiermit wird der Unterschied in den Verfahrwegen der einzelnen Bewegungskomponenten noch einmal verstärkt.

Die Übertragungseinheiten der zweiten Bewegungsübertragungsvorrichtung können dabei bevorzugt ähnlich (siehe oben erwähnte bevorzugte Ausführungsbeispiele) den Übertragungseinheiten der ersten Bewegungsübertragungsvorrichtung ausgestaltet sein, mit der einzigen Ausnahme, daß hier deren erster Abschnitt sowie die Anlenkung des zweiten Abschnitts über entsprechende erste Biegegelenke an dem ersten Abschnitt fehlen.

Die Erfindung schafft ferner eine Positioniervorrichtung mit der erfindungsgemäßen zweiten Bewegungsübertragungsvorrichtung, bei welcher jede Übertragungseinheit über ihren Eingangsabschnitt mit einem Antriebsmittel zum Antreiben dieses Eingangsabschnitts entlang des zugehörigen eingangsseitigen Bewegungsfreiheitsgrads gekoppelt ist. Die Antriebsmittel sind dabei bevorzugt zusammen mit den zugehörigen Eingangsabschnitten nach Art von Linearmotoren ausgebildet.

Nachfolgend wird die Erfindung sowie weitere Vorteile und Merkmale der Erfindung anhand bevorzugter Ausführungsbeispiele mit Bezug auf die beigefügte Zeichnung näher erläutert. In der Zeichnung zeigen:

Fig. 1a, b    jeweils eine Aufsicht und Seitenansicht eines ersten Ausführungsbeispiels einer Übertragungseinheit der erfindungsgemäßen ersten Bewegungsübertragungsvorrichtung,

Fig. 1c, d    die gleichen Darstellungen wie die Figuren 1a und b, wobei in diesen Figuren die Schwenkbewegungen der Übertragungseinheit explizit dargestellt sind,

Fig. 2    eine Aufsicht auf ein zweites Ausführungsbeispiel einer Übertragungseinheit der ersten erfindungsgemäßen Bewegungsübertragungsvorrichtung, wobei bei der Übertragungseinheit die Doppel-Biegegelenke gegenüber der Plattenebene verdreht sind, sowie eine Detailansicht eines solchen Doppel-Biegegelenks,

Fig. 2a, b    jeweils eine Schnittansicht durch die beiden Biegegelenke des in Fig. 2 gezeigten Doppel-Biegegelenks entlang der Schnitte A-A und B-B der Detailansicht in Figur 2,

Fig. 3    eine perspektivische Ansicht eines dritten Ausführungsbeispiels einer Übertragungseinheit der ersten erfindungsgemäßen Bewegungsübertragungsvorrichtung, wobei bei dieser Übertragungseinheit zusätzlich noch mechanische Sperren vorgesehen sind,

Fig. 4    eine perspektivische Ansicht dreier miteinander gekoppelter Übertragungseinheiten, welche zusammen ein erstes Ausführungsbei- spiels einer erfindungsgemäßen Positioniervorrichtung bilden,

Fig. 5    eine perspektivische Ansicht eines zweiten Ausführungsbeispiels einer erfindungsgemäßen Positioniervorrichtung, welche ebenfalls aus drei Übertragungseinheiten zusammengesetzt ist,

Fig. 6    ein bevorzugtes Ausführungsbeispiel eines Antriebsmittels für die Übertragungseinheiten der erfindungsgemäßen Positioniervorrichtung,

Fig. 7    zwei detaillierte perspektivische Darstellungen eines kreisförmigen Biegegelenkes, wobei pro Darstellung unterschiedliche Parameter dieses Biegegelenks angegeben sind, und

Fig. 8    eine perspektivische Ansicht eines dritten Ausführungsbeispiels einer erfindungsgemäßen Positioniervorrichtung mit der zweiten erfindungsgemäßen Bewegungsübertragungsvorrichtung.

In den Figuren bezeichnen gleiche Bezugszeichen gleiche Teile.

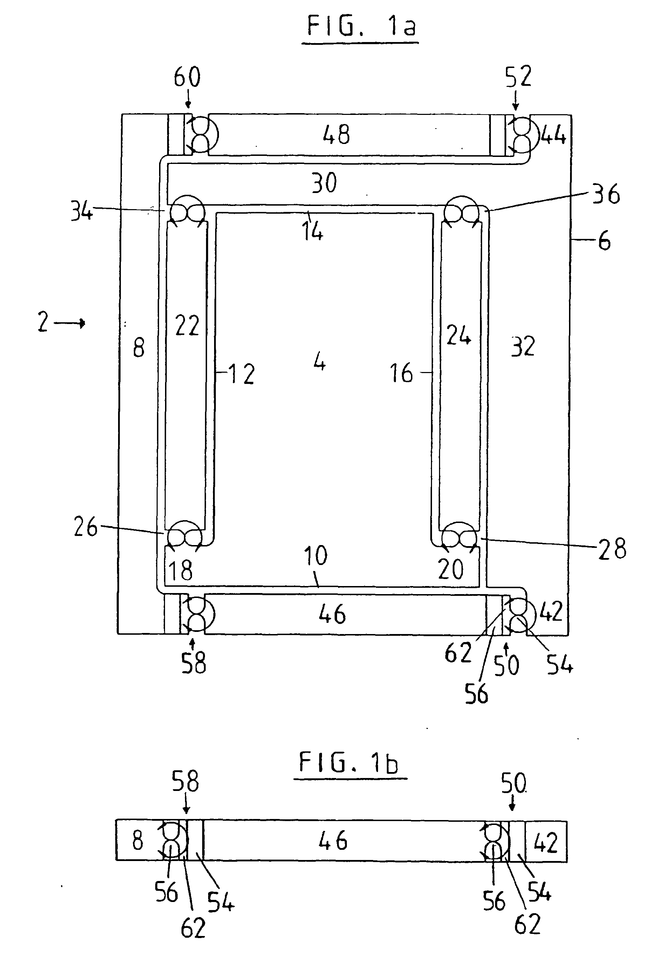

In den Fig. 1a und b ist jeweils eine Aufsicht und eine Seitenansicht eines ersten Ausführungsbeispiels einer Übertragungseinheit 2 einer erfindungsgemäßen ersten Bewegungsübertragungsvorrichtung gezeigt. Die Figuren sowie 1c und d zeigen dasselbe Ausführungsbeispiel wie die Figuren la und 1b, wobei dort zusätzlich die Schwenkbewegungen der Übertragungseinheit 2 dargestellt sind. Die Übertragungseinheit 2 setzt sich aus einem ersten Abschnitt 4, einem zweiten Abschnitt 6 und einem Ausgangsabschnitt 8 zusammen. Der erste Abschnitt 4 ist als rechteckige Platte mit vier Seitenflächen 10, 12, 14 und 16 ausgebildet. Die beiden gegenüberliegenden Seitenflächen 12 und 16 weisen an den Eckbereichen zu den Seitenfläche 10 jeweils einen Vorsprung 18 und 20 auf.

Der erste Abschnitt 4 kann auch nur als Balken ausgebildet sein, dessen beide Enden die Vorsprünge 18 und 20 bilden. Die plattenförmige Alternative wird aus Stabilitätsgründen und aufgrund der Tatsache bevorzugt, daß der erste Abschnitt 4 bezüglich einer unbeweglichen Basis der ersten Bewegungsübertragungsvorrichtung festgelegt wird und daher für die bewegliche Masse jeder Übertragungseinheit 2 keine Rolle spielt. Anstelle des balkenförmig ausgebildeten ersten Abschnitts 4 kann dieser in einer dritten Alternative auch nur in Form zweier separat vorliegender Vorsprünge 18 und 20 ausgebildet sein, die einzeln an einer unbeweglichen Basis der ersten Bewegungsübertragungsvorrichtung festgelegt werden können.

In Erstreckungsrichtung der Seitenflächen 12 und 16 ist jeweils ein Balken 22 und 24 angeordnet. Der Balken 22 verläuft dabei benachbart zur Seitenfläche 12, während der Balken 24 benachbart zur Seitenfläche 16 verläuft. Die Balken 22 und 24 sind über jeweilige Biegegelenke 26 und 28 mit den entsprechenden Vorsprüngen 18 und 20 gekoppelt. Die Biegegelenke gestatten den Balken 22 und 24 jeweils eine Schwenkbewegung von rechts nach links in dem in Fig. la gezeigten Ausführungsbeispiel.

Der zweite Abschnitt 6 weist einen ersten 30 und einen zweiten 32 Schenkelabschnitt auf, die einstückig in Form eines rechtwinkligen Winkels miteinander gekoppelt sind. Der winkelförmige zweite Abschnitt 6 ist dabei so zu dem ersten Abschnitt 4 angeordnet, daß der erste Abschnitt 4 samt der Balken 22 und 24 innerhalb des von dem Winkel aufgespannten Bereiches liegt. An der diesem Leerbereich zugewandten Innenseite des ersten Schenkelabschnittes 30 sind die Balken 22 und 24 über weitere Biegegelenke 34 und 36 mit dem ersten Schenkelabschnitt gekoppelt. Genauer gesagt, ist die eine Stirnseite des Balkens 22 über das Biegegelenk 34 im Stirnbereich des ersten Schenkelabschnittes 30 mit dessen inneren Seitenfläche gekoppelt. Somit ist der Balken 22 senkrecht zu dem ersten Schenkelabschnitt 30 angeordnet. Der Balken 24 ist über seine eine Stirnseite mittels des Biegegelenkes 36 im Bereich der Schenkelbasis des Schenkelabschnittes 30 mit dessen Innenseite gekoppelt. Auch der Balken 22 ist senkrecht zu dem ersten Schenkelabschnitt 30 angeordnet.

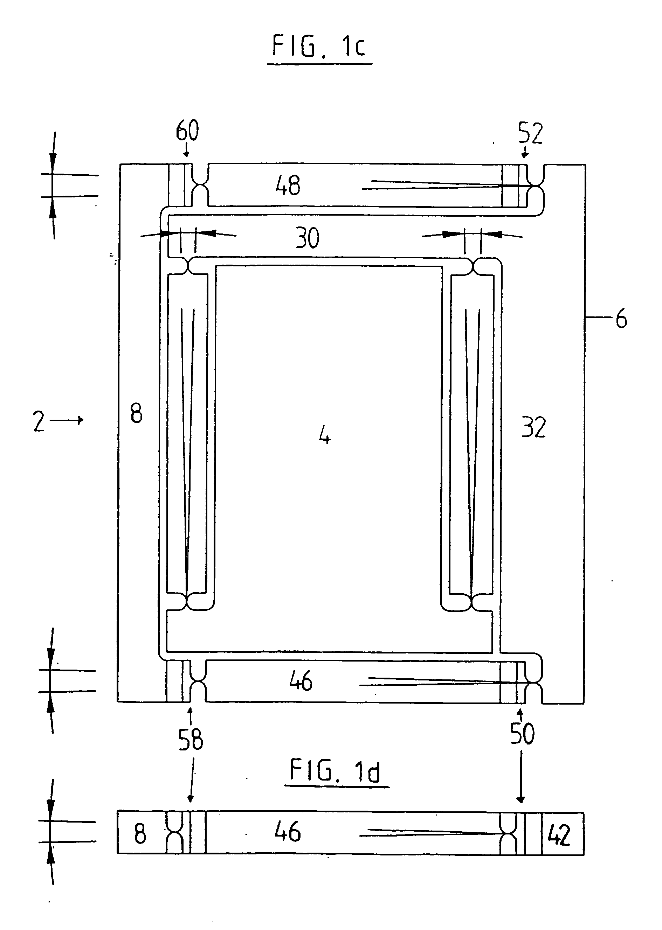

Insgesamt bilden diese aus den Vorsprüngen 18 und 20, den beiden Balken 22 und 24, den vier Biegegelenken 18, 20 34 und 36 und dem ersten Schenkelabschnitt 36 bestehende Anordnung ein Parallelogramm-Schwenkgelenk, das in dem in Fig. la dargestellten Ausführungsbeispiel von links nach rechts schwenkbar ist (siehe hierzu auch Fig. 1c). Bei festgelegtem ersten Abschnitt 4 schwenken die beiden Balken 22 und 24 dabei jeweils um ihre zugehörigen Biegegelenke 26 und 28 in Form einer Pendelbewegung, während der erste Schenkelabschnitt 30 eine translatorische Bewegung von links nach rechts und umgekehrt ausführt (in dem in den Fig. 1a und c dargestellten Ausführungsbeispiel). Aufgrund der Ausbildung dieses Parallelogramm-Schwenkgelenks ist der Translationsbewegung von rechts nach links eine zwangsgekoppelte Translationsbewegung des zweiten Abschnittes 6 von oben nach unten und umgekehrt überlagert. Diese ggf. unerwünschte überlagerte Translationsbewegung kann bei entsprechender Kombination mehrerer Übertragungseinheiten 2 ggf. kompensiert werden (siehe weiter unten).

Der zweite Schenkelabschnitt 32 des zweiten Abschnittes 6 weist an seinen beiden Enden jeweils einen einstückig verbundenen Vorsprung 42 und 44 auf. An den Vorsprüngen 42 und 44 sind jeweils ein Balken 46 und 48 über ein entsprechendes Doppel-Biegegelenk 50 und 52 angelenkt. Der Balken 46 verläuft dabei der Seitenfläche 10 des ersten Abschnittes 4 gegenüberliegend, während der Balken 48 der Außenseite des ersten Schenkelabschnittes 30 des zweiten Abschnittes 6 gegenüberliegend verläuft. Insgesamt umgreifen somit die beiden Balken 22 und 24 den ersten Abschnitt 4, während die beiden Balken 46 und 48 den ersten Abschnitt 4 und den ersten Schenkelabschnitt 30 umgreifen. Ferner sind die beiden Balken 46 und 48 orthogonal zu den beiden Balken 22 und 24 ausgerichtet.

Das Doppel-Biegegelenk 50 umfaßt in dem in den Fig. la-d gezeigten Ausführungsbeispiel ein erstes 54 und zweites 56 Biegegelenk, die orthogonal zueinander ausgerichtet sind. Das erste Biegegelenk 54 gestattet den Balken 46 und 48 eine Schwenkbewegung in dem in Fig. la gezeigten Ausführungsbeispiel von oben nach unten und umgekehrt. Das zweite Biegegelenk 56 der Doppel-Biegegelenke 50 und 52 ermöglicht den Balken 46 und 48 eine Schwenkbewegung des in Fig. la gezeigten Ausführungsbeispiels aus der Zeichenebene heraus (siehe hierzu auch Fig. 1b und d).

Die Balken 46 und 48 sind mit ihren beiden anderen Enden jeweils über ein erstes und ein zweites Doppel-Biegegelenk 58 und 60 mit dem Ausgangsabschnitt 8 gekoppelt. Hierbei sind die Doppel-Biegegelenke 58 und 60 jeweils im Stirnbereich des Ausgangsabschnittes 8 an eine Längsseite des Ausgangsabschnittes 8 gekoppelt. Somit stehen die Balken 46 und 48 senkrecht auf dieser Längsseite des Ausgangsabschnitts 8. Beide Doppel-Biegegelenke 58 und 60 setzen sich ebenfalls jeweils aus dem ersten Biegegelenk 54 und dem zweiten Biegegelenk 56 zusammen.

Insgesamt ist in jedem der Doppel-Biegegelenk 50, 52, 58 und 60 das erste Biegegelenk 54 über einen Belastungsverteilungsabschnitt 62 funktionell seriell mit dem zweiten Biegegelenk 56 gekoppelt. Der Belastungsverteilungsabschnitt 62 ist hierbei ein in seiner Länge kurzer balkenförmiger Abschnitt, dessen Querschnitt hier dem Balken 46 angepaßt ist (der Querschnitt kann beliebig gewählt sein, insbesondere den Belastungskräften angepaßt). Seine Länge sollte mindestens so lang sein, daß keine Kerbbeanspruchung an den Übergängen zu den beiden Biegegelenken auftreten, aber so kurz, daß die beiden Gelenke möglichst nah beieinander liegen.

Die Doppel-Biegegelenke 50, 52, 58 und 60 sind in ihrer Längsrichtung so dimensioniert, daß sie der Breite des Balkens 22 bzw. 24 entsprechen. Die Doppel-Biegegelenke 58 und 60 sind ferner so angeordnet, daß das den Balken 46 bzw. 48 zugewandte Ende des ersten Biegegelenks 54 mit der der Seitenfläche 12 des ersten Abschnittes 4 zugewandten Außenseite des Balkens 22 fluchtet, während das dem Ausgangsabschnitt 8 zugewandte Ende des zweiten Biegegelenks 56 mit der dem Ausgangsabschnitt 8 zugewandten Außenseite des Balkens 22 fluchtet. Die Biegegelenke 34 und 36 sind hingegen so angeordnet, daß ihr Zentrum (d.h. ihr dünnster Steg) mit der Seitenfläche 14 des ersten Abschnitts 4 fluchtet. Die Doppel-Biegegelenke 50 und 52 wiederum sind so angeordnet, daß die den beiden Balken 46 bzw. 48 zugewandten Enden der zweiten Biegegelenke 56 mit der dem Balken 24 zugewandten Außenseite des zweiten Schenkelabschnittes 32 des zweiten Abschnittes 6 fluchten.

Der zweite Schenkelabschnitt 32 des zweiten Abschnittes 6, der Ausgangsabschnitt 8 und die beiden Balken 46 und 48 bilden somit ein zweites Parallelogramm-Schwenkgelenk, das dem Ausgangsabschnitt 8 in dem in Fig. la gezeigten Ausführungsbeispiel eine Schwenkbewegung sowohl von oben nach unten und umgekehrt wie auch aus der Zeichenebene heraus ermöglicht. Wiederum sind diesen beiden orthogonal zueinander ausgerichteten, translatorischen Bewegungen jeweils orthogonal zu diesen ausgerichtete Translationsbewegungen zwangsgekoppelt überlagert. Bei einer "translatorischen" Bewegung des Ausgangsabschnittes 8 von oben nach unten ist eine "translatorische" Bewegung von links nach rechts und bei einer "translatorischen" Bewegung des Ausgangsabschnittes 8 aus der Zeichenebene heraus ebenfalls eine "translatorische" Bewegung von rechts nach links überlagert.

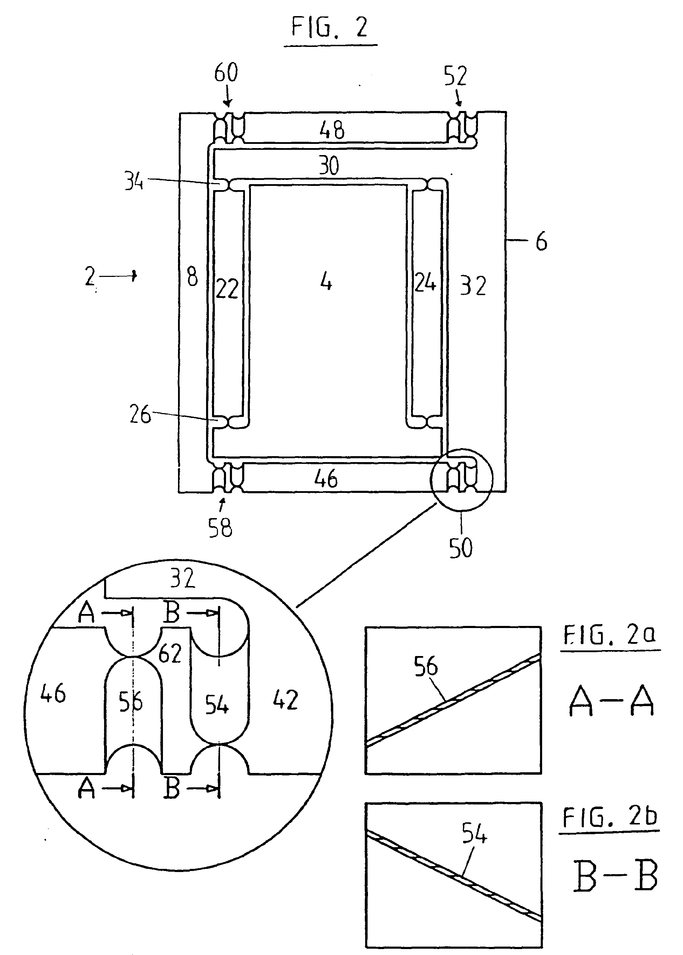

Fig. 2 zeigt eine Aufsicht auf ein zweites Ausführungsbeispiel einer Übertragungseinheit 2 (erste Bewegungsübertragungsvorrichtung), bei welcher die Doppel-Biegegelenke 50, 52, 58 und 60 mittels zweier Biegegelenke 54 und 56 ausgebildet sind, die mit einem Winkel von etwa 60° zueinander sowie mit einem Winkel von etwa jeweils 30° gegenüber der Plattenebene der Übertragungseinheit 2 verdreht sind. Dies ist insbesondere dann vorteilhaft, wenn die Übertragungseinheit 2 mittels der Draht-Funkenerosionsbearbeitung aus einem einzelnen plattenförmigen Material (z. B. einer Titan-Legierung) hergestellt wird. Bei dieser Bearbeitungsmethode sind nämlich in der Plattenebene liegende Bearbeitungsschnitte nur durch Umspannen des Werkstückes bzw. durch zusätzliches Drehen des Werkstückes auf dem Bearbeitungstisch möglich, wenn die plattenmäßige Ausdehnung der Übertragungseinheit 2 die maximal zulässige Schnittdicke bei dieser Bearbeitung nicht überschreitet.

Die in den Fig. 2, 2a und 2b dargestellten Doppel-Biegegelenke 50, 52, 58 und 60 ermöglichen nunmehr aber eine Fertigung ohne diese problematischen plattenparallelen Schnitte, da ihr Biegegelenk 56 aus der Plattenebene heraus gedreht ist. Dabei kann der Ausgangsabschnitt 8 weiterhin die gleichen Schwenkbewegungen bezüglich des zweiten Abschnittes 6 ausführen. Dies wird dadurch ermöglicht, daß die Doppel-Biegegelenke 50, 52, 58 und 60 so dimensioniert sind, daß sie neben ihrer vorgesehenen Schwenkbewegung noch eine Torsionsbewegung zulassen. Das bedeutet, daß das zweite Biegegelenk 56 eine Torsionsbewegung des Balken 46 bezüglich des Belastungsverteilungsabschnittes 62 und das erste Biegegelenk 54 eine Torsionsbewegung des Belastungsverteilungsabschnittes 62 bezüglich des Vorsprungs 42 ermöglicht. Insgesamt kann der Balken 46 bei einer Schwenkbewegung des Ausgangsabschnittes 8 von oben nach unten oder umgekehrt bzw. aus der Zeichenebene heraus eine Torsionsbewegung durchführen, die aufgrund der Verdrehung des ersten und des zweiten Biegegelenks 54 und 56 bei der Schwenkbewegung zwangsgekoppelt hervorgerufen wird.

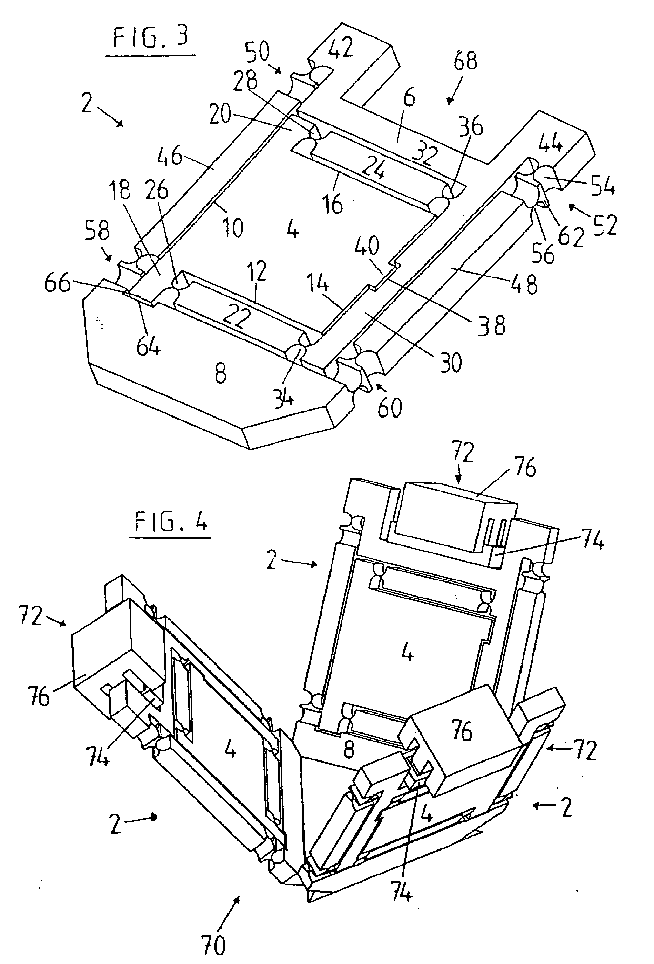

Bei der in Fig. 3 gezeigten perspektivischen Ansicht eines dritten Ausführungsbeispiels der Übertragungseinheit 2 (erste Bewegungsübertragungsvorrichtung) ist zum Einschränken des Schwenkbereiches des zweiten Abschnitts 6 bezüglich des ersten Abschnitts 4 an der Seitenfläche 14 des ersten Abschnitts 4 eine Ausnehmung 38 vorgesehen. In diese Ausnehmung 38 greift eine an der Innenseite des ersten Schenkelabschnittes 30 angeordnete Nase 40 ein. Die Ausnehmung 38 und die Nase 40 sind dabei so dimensioniert, daß der erste Schenkelabschnitt 30 ausgehend von seiner Ruhestellung jeweils eine bestimmte maximale Auslenkung nach links und rechts ausführen kann. Diese maximale Auslenkung kann durch den maximal zulässigen Biegewinkel der Biegegelenke 26, 28, 34 und 36 vorgegeben sein.

Weiterhin ist in dem Ausgangsabschnitt 8 eine weitere Ausnehmung 64 zur Aufnahme einer Verlängerung 66 des Vorsprungs 18 des ersten Abschnittes 4 vorgesehen. Die Ausnehmung 64 und die Verlängerung 66 arbeiten wie die Ausnehmung 38 und die Nase 40 als eine mechanische Sperre, welche die Schwenkbewegung des Ausgangsabschnittes 8 in dem in Fig. la gezeigten Ausführungsbeispiel von oben nach unten beschränkt. Eine weitere, nicht dargestellte mechanische Sperre zum Einschränken des Schwenkbereiches aus der Zeichenebene heraus kann dadurch vorgesehen werden, daß an der in Fig. 3 gezeigten Verlängerung 66 jeweils an deren Ober- und Unterseite eine Auskragung vorgesehen ist, welche eine Schwenkbewegung des Ausgangsabschnittes 8 aus der Zeichenebene heraus einschränkt.

In dem in Fig. 3 dargestellten dritten Ausführungsbeispiel (erste Bewegungsübertragungsvorrichtung) ist zwecks Gewichtsverminderung der beweglichen Teile, der zweite Schenkelabschnitt 32 des zweiten Abschnittes 6 mit einem großen sich nach außen öffnenden Einschnitt 68 ausgebil-det. Insgesamt hat der zweite Schenkelabschnitt 32 nunmehr nur noch in Form eines schlanken Balkens mit zwei an den Balkenenden seitlich versetzt angebrachten Vorsprüngen 42 und 44.

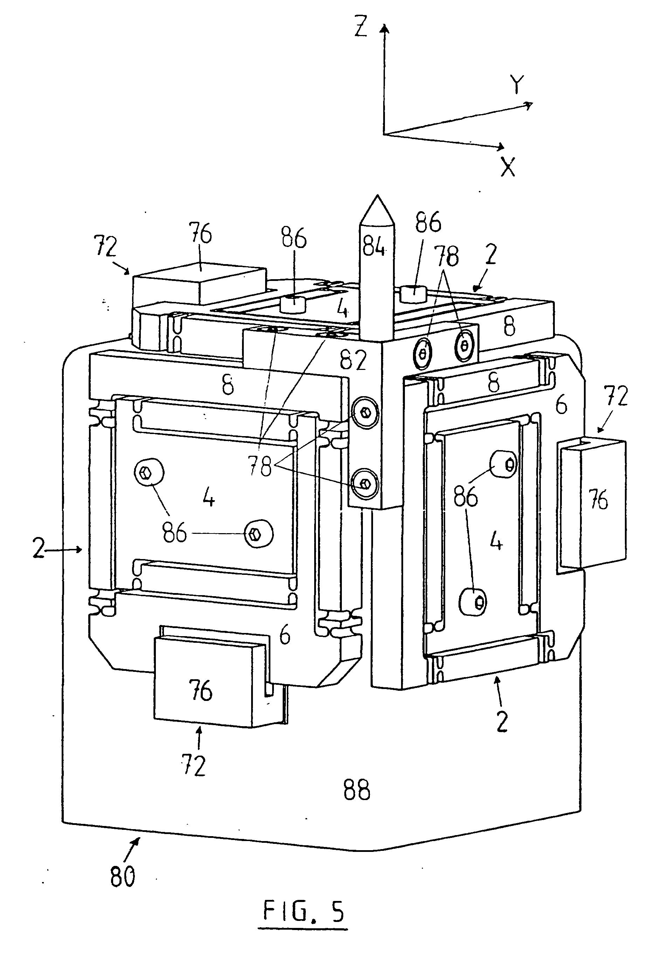

In Fig. 4 ist eine perspektivische Ansicht eines ersten Ausführungsbeispiels einer erfindungsgemäßen ersten Bewegungsübertragungsvorrichtung 70 gezeigt, die sich aus drei jeweils über ihre Ausgangsabschnitte 8 miteinander gekoppelten Übertragungseinheiten 2 zusammensetzt. Diese drei Übertragungseinheiten 2 sind in dem in Fig. 4 gezeigten Ausführungsbeispiel einer ersten Bewegungsübertragungsvorrichtung 70 zwar nicht bezüglich ihrer plattenförmigen Ausdehnung orthogonal zueinander ausgerichtet, ermöglichen jedoch aufgrund ihrer Anordnung eine gekoppelte Bewegung der miteinander verbundenen Ausgangsabschnitte 8 mit drei translatorischen Bewegungsfreiheitsgraden.

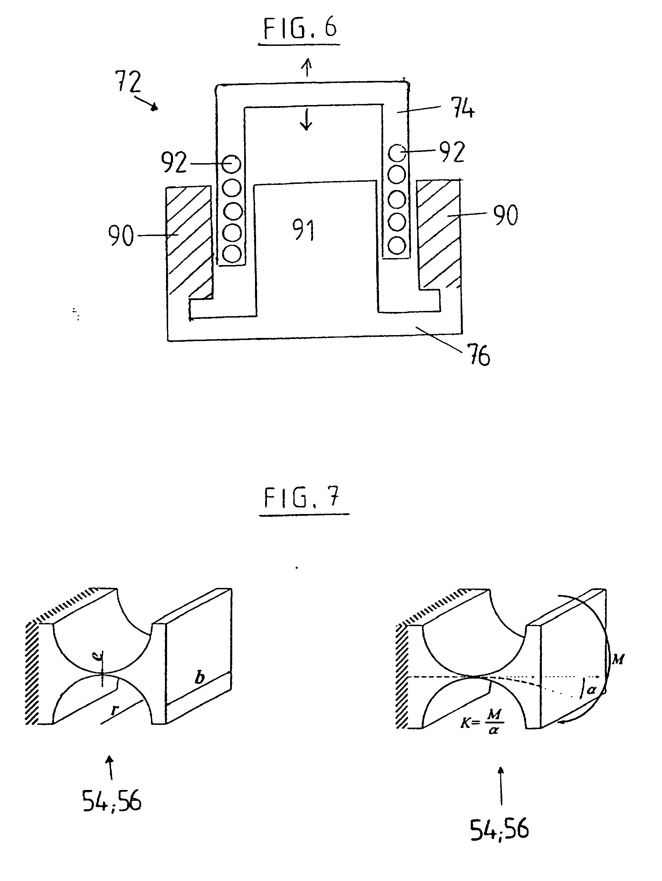

Für ein Positionieren der miteinander gekoppelten Ausgangsabschnitte 8 sind die zweiten Abschnitte 6 der drei Übertragungseinheiten 2 jeweils über deren zweite Schenkelabschnitte 32 mit einem Antriebsmittel 72 gekoppelt. Die Antriebsmittel 72 sind als elektromechanischer Aktuator ausgebildet, der mit Bezug auf Fig. 6 näher erläutert wird. Insgesamt sind die Antriebsmittel 72 jeweils entlang ihrer Antriebsrichtung so bemessen, daß sie in die Einschnitte 68 der zweiten Schenkelabschnitte 32 passen. Hierzu ist die Innenseite des Einschnitts 68 mit dem beweglichen, angetriebenen Teil 74 des Antriebsmittels 72 starr verbunden, während der unbewegliche, antreibende Teil 76 der Antriebsmittel 72 mit der im Arbeitsraum festen Basis (in Figur 3 nicht dargestellt) der ersten Bewegungsübertragungsvorrichtung 70 starr verbunden ist. Mit dieser festen Basis der ersten Bewegungsübertragungsvorrichtung 70 sind jeweils auch die ersten Abschnitte 4 der drei Übertragungseinheiten 2 starr verbunden.

Das gezeigte Antriebsmittel 72 läßt vorteilhaft eine geringe Bewegung seines angetriebenen Teils 74 orthogonal zu seiner Antriebsrichtung zu (wenn beide Teile 74 und 76 entsprechend ausgebildet sind, siehe Figur 6). Dies ist vorteilhaft, da der Abschnitt 6 bei seiner Bewegung in Antriebsrichtung stets auch eine zwangsgekoppelte Bewegung senkrecht zur Antriebsrichtung durchführt. Bei einem als Spindeltrieb ausgebildeten Antriebsmittel 72 müßte der "feste" Teil beispielsweise über ein Schwenkgelenk (Biegegelenk) mit der Basis fest verbunden sein, damit seine Spindel nicht verkantet.

Insgesamt führt also jede Übertragungseinheit 2 eine angetriebene Bewegung ihres Ausgangsabschnitts 8 entlang der Antriebsrichtung ihres zugehörigen Antriebsmittels 72 aus, wobei jede Übertragungseinheit 2 entlang dieser Antriebsrichtung eine steife Einheit bildet. Diese Antriebsbewegung führt jede Übertragungseinheit 2 über ihr erstes Parallelogramm-Schwenkgelenk, bestehend aus den Biegegelenken 26, 28, 34 und 36 aus. Senkrecht zu dieser Antriebsrichtung (oder unter einem beliebigen Winkel hierzu) läßt jede Übertragungseinheit 2 über ihr zweites Parallelogramm-Schwenkgelenk, bestehend aus den Doppel-Biegegelenken 50, 52, 58 und 60, eine translatorische Bewegung (genauer gesagt eine Schwenkbewegung ohne Rotation des Ausgangsabschnitts 8) in Antriebsrichtung der beiden anderen Übertragungseinheiten 2 zu.

Aufgrund der in Fig. 4 gezeigten, besonderen Anordnung der Übertragungseinheiten 2 führt jede Übertragungseinheit 2, wenn nur sie allein, nicht jedoch die beiden anderen Übertragungseinheiten 2 angetrieben werden, neben der "Schwenkbewegung" des ersten Parallelogramm-Schwenkgelenks (entlang der Antriebsrichtung) auch eine damit zwangsgekoppelte "Schwenkbewegung" über das zweite Parallelogramm-Schwenkgelenk aus (und zwar indem lediglich über die zweiten Biegegelenke 56 des zweiten Parallelogramm-Schwenkgelenkes "geschwenkt" wird). Das erste Parallelogramm-Schwenkgelenk hat nämlich gerade auch die oben erwähnte zwangsgekoppelte translatorische Querbewegung senkrecht zu der angetriebenen translatorischen Bewegung. Diese zwangsgekoppelte Querbewegung wird bei einem in dieser Richtung der Querbewegung nicht nachgiebigen Ausgangsabschnitt 8 (die Antriebsmittel 72 der beiden anderen Übertragungseinheiten 2 blockieren in Richtung dieser Querbewegung) von dem zweiten Parallelogramm-Schwenkgelenk aufgenommen.

Wie aus der obigen Anordnung der einzelnen Übertragungseinheiten 2 ersichtlich wird, können diese unter beliebigen Winkeln zueinander ausgerichtet sein. Dabei kann eine dieser Übertragungseinheiten 2 auch ohne Antriebsmittel 72 ausgebildet sein und beispielsweise nur als Stabilisator für die Bewegung des gemeinsamen Ausgangsabschnitts 8 dienen.

Fig. 5 zeigt eine perspektivische Ansicht eines zweiten Ausführungsbeispiels einer Positioniervorrichtung 80 mit einer ersten Bewegungsübertragungsvorrichtung, die aus drei orthogonal zueinander angeordneten Übertragungseinheiten 2 zusammengesetzt ist. Diese drei Übertragungseinheiten 2 sind jeweils über ihre Ausgangsabschnitte 8 mit einem dreidimensionalen Winkel 82 über Befestigungsschrauben 78 starr verbunden, der eine Positionierspitze 84 trägt. Die Übertragungseinheiten 2 wiederum sind über ihre ersten Abschnitte 4 mittels Befestigungsschrauben 86 mit einer im Arbeitsraum festen Basis 88 starr verbunden. Die feste Basis 88 kann dabei die Form eines hohlen Quaders haben, in dem die erforderlichen Antriebsmittel 72 der Übertragungseinheiten 2 sowie deren nicht dargestellte Steuerungsmittel und Positionsmeßmittel angeordnet sind. Die Übertragungseinheiten 2 sind derart bezüglich der Außenkanten der festen Basis 88 angeordnet, daß die einzelnen "Schwenkbewegungen" nicht durch ein eventuell im Wege stehendes Material behindert werden. Gleiches gilt für die Befestigung des dreidimensionalen Winkels 82 an den Ausgangsabschnitten 8.

Bei einem Antrieb der in Fig. 5 rechts liegenden Übertragungseinheit 2 in negativer Y-Richtung überlagert beispielsweise die in Fig. 5 links liegende Übertragungseinheit 2 der Positionierspitze 84 durch eine entsprechende "Schwenkbewegung" ihres Ausgangsabschnittes 8 eine Bewegungskomponente in negativer Z-Richtung (diese Bewegungskomponente wird ebenfalls durch das erste Parallelogramm-Schwenkgelenk der links liegenden, antreibenden Übertragungseinheit 2 hervorgerufen). Diese Bewegungskomponente in negativer Z-Richtung kann durch einen entsprechenden Antrieb der in Fig. 5 links liegenden Übertragungseinheit 2 in positive Z-Richtung kompensiert werden. Ähnliches gilt für den Antrieb der Positionierspitze 84 in X- und in Z-Richtung, bei der eine entsprechende Kompensationsbewegung der beiden anderen Übertragungseinheiten 2 erforderlich ist.

Diese Kompensationsbewegung kann von einem nicht dargestellten Steuerungsmittel mit einem integrierten Korrekturalgorithmus gesteuert werden. Der Korrekturalgorithmus kann dabei die einzelnen Zwangskopplungen in Form einer 3x3-Korrekturmatrix speichern, welche mit dem die gewünschte räumliche Bewegung der Positionierspitze 84 darstellenden dreidimensionalen Bewegungsvektor multipliziert wird und als Ergebnis die jeweilige anzutreibende Bewegungskomponente jeder Übertragungseinheit 2 angibt. Diese 3x3-Korrekturmatrix kann dabei entweder rechnerisch aus der Geometrie der gesamten Anordnung oder mittels maximal neun Messungen der räumlichen Anordnung der Positionierspitze 84 bei unterschiedlichen Stellungen der drei Antriebsmittel 72 der drei Übertragungseinheiten 2 ermittelt werden.

Die feste Basis 88 kann wiederum mit einer nicht dargestellten Makropositioniervorrichtung gekoppelt sein, so daß insgesamt der Verfahrweg der Positionierspitze 84 vergrößert wird. Bei entsprechender Ausbildung der Übertragungseinheiten 2 und der Positioniervorrichtung 80 führt die Positionierspitze 84 nämlich lediglich Bewegungen im Millimeterbereich aus, was insbesondere durch die zulässigen Schwenkbewegungen der Biegegelenke (ungefähr +/- 10°) und die Länge der Balken 22, 24, 46 und 48 bedingt ist.

Die feste Basis 88 kann nunmehr so im Arbeitsraum ausgerichtet sein, daß bei Verfahren der Positionierspitze 84 entlang der Z-Richtung (welche bezüglich der Schwerkraftrichtung ausgerichtet ist) entweder nur eine Übertragungseinheit 2 (erste Alternative) oder alle drei Übertragungseinheiten 2 gleichzeitig angetrieben werden müssen (zweite Alternative). Die zweite Alternative hat den Vorteil, daß die Antriebsmittel 72 von allen drei Übertragungseinheiten 2 von ihrer Leistung gleichmäßig stark ausgebildet sein können. Bei der ersten Alternative müßte die Übertragungseinheit 2 für die Bewegung der Positionierspitze 84 in Z-Richtung entweder in der Leistung stärker ausgebildet sein und/oder es müßte ein Federmittel funktionell parallel zwischen den ersten Abschnitt 4 und den zweiten angetriebenen Abschnitt 6 gekoppelt werden, daß eine Vorspannung entgegen der Schwerkraft erzeugt. Bei der zweiten Alternative hingegen müssen für eine alleinige Bewegung entlang der X-, der Y- oder der Z-Richtung immer jeweils alle drei Übertragungseinheiten 2 angetrieben werden. Dies stellt jedoch bei den heutigen Steuerungsmitteln kein Problem dar.

Die Antriebsmittel 72 können jeweils noch mit einer nicht dargestellten Meßeinrichtung gekoppelt sein, welche die relative Lage des zweiten Abschnittes 6 bezüglich des ersten Abschnittes 4 jeder Übertragungseinheit 2 getrennt ermitteln. Dabei ist insbesondere eine besonders genaue Ansteuerung der Positionierspitze 84 möglich. Ferner kann bei einer solchen Ausgestaltung die Positioniervorrichtung 80 als Joystick mit Kraftrückführung ausgebildet sein. Der Joystick ist dabei starr mit der Positionierspitze 84 verbunden, so daß eine räumliche Bewegung des Joysticks über die drei nicht dargestellten Meßeinrichtungen der drei Übertragungseinheiten 2 festgestellt werden und über die entsprechenden Antriebsmittel 72 eine Kraftrückführung zu dem Joystick erfolgen kann.

Das erste und das zweite Parallelogramm-Schwenkgelenk können so ausgebildet sein, daß sie anstelle der "Schwenkbewegung" eine Rotationsbewegung jeweils des ersten Schenkelabschnittes 30 bzw. des Ausgangsabschnittes 8 um einen jeweiligen Bezugspunkt zulassen. Dies kann dadurch erfolgen, daß die Balken 22 und 24 bzw. 46 und 48 der beiden Parallelogramm-Schwenkgelenke nicht parallel zueinander sondern trapezartig zueinander ausgerichtet sind. Mit einer entsprechenden Positioniervorrichtung wäre somit eine Rotation der Positionierspitze 84 um die X-, die Y- wie auch die Z-Achse möglich. Eine solche Positioniervorrichtung könnte mit der in Fig. 4 gezeigten Positioniervorrichtung 80 funktionell seriell gekoppelt sein, so daß insgesamt eine Bewegung der Positionierspitze 84 mit sechs unabhängigen Bewegungsfreiheitsgraden möglich ist (drei translatorische Bewegungen und drei Rotationsbewegungen). Selbstverständlich ist auch jede andere Kombination an Übertragungseinheiten 2 möglich, so daß insgesamt beispielsweise ein Spielraum von zwei bis sechs Bewegungsfreiheitsgraden abgedeckt werden kann.

Fig. 6 zeigt eine Querschnittansicht eines als elektromagnetischer Aktuator ausgebildeten Antriebsmittel 72. Der bewegliche, angetriebene Teil 74 des Antriebsmittels 72 weist dabei eine kastenförmige Topfform auf, deren äußere Bodenseite mit dem zweiten Schenkelabschnitt 32 des zweiten Abschnittes 6 starr verbunden wird. Der unbewegliche, antreibende Teil 76 des Antriebsmittels 72 weist dabei eine E-Form auf, deren unterer und oberer Querteil als Permanentmagnet 90 ausgebildet sind. Alternativ kann ein Permanentmagnet 90 im Bereich dieser Querteile mit dem unbeweglichen Teil 76 starr verbunden sein. Der mittlere Querteil 91 des unbeweglichen Teils 76 ragt dabei in die Öffnung des topfförmigen Teils 74 und füllt dieses vom Querschnitt im wesentlichen aus. Ferner ist die Wandstärke des topfförmigen Teils 74 so bemessen, daß sie im wesentlichen die Freiräume zwischen den Querteilen des unbeweglichen Teils 76 im wesentlichen ausfüllen. Um den Außenabschnitt des topfförmigen Teils 74 (bzw. in die Außenwand eingelassen) ist eine stromleitende Wicklung 92 gewickelt, welche bei Anlegen eines Stroms ein Magnetfeld innerhalb des topfförmigen Teils 74 erzeugt, das in Richtung des Topfbodens oder in Gegenrichtung ausgerichtet ist. Dieses Magnetfeld wirkt auf den als Polschuh der beiden Permanentmagneten 90 ausgebildeten mittleren Querteil 91 des unbeweglichen Teils 76. Abhängig von der angelegten Stromstärke und der rückwirkenden Kraft auf das bewegliche Teil 74 stellt sich somit eine Relativposition des beweglichen Teils 74 zu dem unbeweglichen Teil 76 ein. Die rückwirkende Kraft wird bei der in Fig. 5 gezeigten Positioniervorrichtung 80 durch die rückstellenden Kräfte der einzelnen Biegegelenke 26, 28, 34, 36, 50, 52, 58 und 60 hervorgerufen, wenn diese aus ihrer Ruhelage ausgeschwenkt werden. Da die auf das bewegliche Teil 74 ausgeübte Kraft proportional zu dem angelegten Strom ist, kann insgesamt eine gute Steuerung der Linearbewegung erzielt werden. Im Zusammenspiel mit einer entsprechenden Meßeinrichtung und einer zugehörigen Regelungsschleife zwischen Meßeinrichtung und Antriebsmittel 72 kann eine sehr genaue Steuerung der Linearbewegung erfolgen.

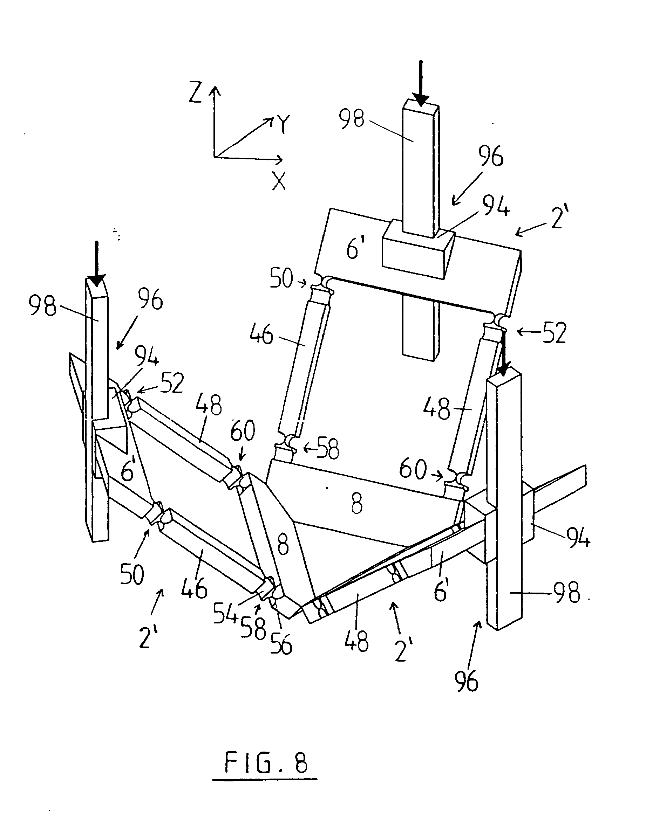

Fig. 7 zeigt zwei perspektivische Ansichten einer speziellen Ausgestaltung der in der erfindungsgemäßen Bewegungsübertragungsvorrichtung eingesetzten mit Einkerbungen ausgebildeten Biegegelenke. In dem in Figur 7 gezeigten Ausführungsbeispiel ist die Einkerbung kreisförmig (es sind auch alle anderen Formen an Einkerbungen möglich). Zusätzlich sind in den beiden Darstellungen der Fig. 7 jeweils die verschiedenen Parameter eingezeichnet, die zum Beschreiben des kreisförmigen Biegegelenkes herangezogen werden können. Ein kreisförmiges Biegegelenk kann als ein Balken mit variierender Querschnittsfläche angesehen werden. Falls ein reines Biegemoment M auf die Spitze dieses Biegegelenks ausgeübt wird, biegt dieses um einen Winkel $\alpha$. Die Winkelsteifigkeit des Biegeelementes wird definiert als $K = M/\alpha$. Diese Winkelsteifigkeit K kann durch eine vereinfachte Formel angenähert werden, die eine sehr gute Näherung der tatsächlichen Winkelsteifigkeit liefert:

$$K = \frac{2 \cdot E \cdot b \cdot e^{2.5}}{9 \cdot \pi \cdot r^{0.5}}$$

wobei E der Young-Modulus, b die Breite des Biegegelenks, e die Wandstärke des Biegegelenks an seiner dünnsten Stelle und r der Radius des kreisförmigen Ausschnittes ist. Mit Hilfe dieser Näherungsformel kann beispielsweise die Rückstellkraft einzelner ausgelenkter Abschnitte einer Übertragungseinheit 2 berechnet werden.

Ausgehend von dieser Formel kann ferner eine Näherungsformel für die maximale Biegebelastung in dem Biegegelenk als eine Funktion der Auslenkung $\alpha$ angegeben werden:

$$\sigma = \frac{4 \cdot E \cdot \sqrt{e} \cdot \alpha}{3 \cdot \pi \cdot \sqrt{r}}$$

Insgesamt wird aus dieser Formel deutlich, daß kleine Radien der kreisförmigen Biegegelenke eine hohe Biegebelastung und große Radien eine niedrige Biegebelastung hervorrufen. Dies zeigt, daß im Zuge der Miniaturisierung der Übertragungseinheit 2 die einzelnen Abschnitte 4, 6 und 8 auch über einfache kreisförmige Biegegelenke mit großem Radius verbunden sein können (anstelle zusätzlich über die Balken 22, 24, 46 und 48 und die Parallelogramm-Schwenkgelenk-Ausbildung), so daß im Ergebnis prinzipiell nur eine kinematische Anordnung dreier orthogonal miteinander verbundener Biegegelenke vorliegt. Die drei Abschnitte 4, 6 und 8 der Übertragungseinheit 2 müssen daher lediglich nur noch so groß dimensioniert werden, daß sie eine Belastungsverteilung zwischen den seriell miteinander gekoppelten Biegegelenken und weiterhin eine Verbindungsmöglichkeit mit dem Antriebsmittel 72 bzw. dem Ausgang 82 und 84 bzw. der Befestigung an einer festen Basis 88 bieten.

Für weitere Details bezüglich der Ausbildung der kreisförmigen Biegegelenke, insbesondere im Zusammenhang mit ihrer Herstellung über ein Elektroerosionsverfahren, wird auf die Veröffentlichung "Fatigue failure of thin wireelectrodischarge machined flexible hinges" von Simon Henein, Cédric Aymon, Stefano Bottinelli und Reymond Clavel in Proc. of SPIE symp. on Intelligent Systems and Advanced Manufacturing, Boston, USA, 19.-22. September 1999 verwiesen. Die dortige Offenbarung wird durch Bezugnahme explizit in die vorliegende Beschreibung mit aufgenommen.

Fig. 8 zeigt in perspektivischer Ansicht ein Ausführungsbeispiel einer weiteren Positioniervorrichtung mit einer zweiten Bewegungsübertragungsvorrichtung, die aus drei Übertragungseinheiten 2' ähnlich den Übertragungseinheiten 2 der ersten Bewegungsübertragungsvorrichtung aufgebaut ist. Die Übertragungseinheiten 2 und 2' unterscheiden sich lediglich darin, daß bei den Übertragungseinheiten 2' jeweils der erste Abschnitt 4 sowie das aus den Biegegelenken 26, 28, 34 und 36 sowie den Balken 22 und 24 bestehende Parallelogramm-Biegegelenke zwischen dem ersten Abschnitt 4 und dem zweiten Abschnitt 6 fehlt und der eingangsseitige zweite Abschnitt 6' etwas unterschiedlich ausgebildet ist. Im übrigen sind die Übertragungseinheiten 2 und 2' jedoch gleich aufgebaut, so daß für eine nähere Beschreibung dieser Ausbildung auf die obigen Ausführungen verwiesen wird.

An dem zweiten Abschnitt 6' jeder Übertragungseinheit 2' ist ein beweglicher, angetriebener Teil 94 eines Antriebsmittels 96 so angebracht, daß der zweite Abschnitt 6' jeder Übertragungseinheit 2' unter einem bestimmten Winkel zur entsprechenden Erstreckungsrichtung der zugehörigen Übertragungseinheit 2' angetrieben wird. Hierzu ist ein fester antreibender Teil 98 des Antriebsmittels als Art Laufstange ausgebildet, entlang der der bewegliche Teil 94 nach Art eines Linearmotors bewegt werden kann. In dem in Fig. 8 gezeigten Ausführungsbeispiel erfolgt der Antrieb des zweiten (Eingangs)-Abschnitts 6' von allen drei Übertragungseinheiten 2' parallel der Z-Richtung, die in Fig. 8 von oben nach unten verläuft (dies muß jedoch nicht immer der Fall sein, beispielsweise können alle drei festen Teile 98 unter einem bestimmten Winkel zur Z-Richtung angeordnet sein). Darüber hinaus sind in dem in Fig. 8 gezeigten Ausführungsbeispiel die zweiten (Eingangs)-Abschnitte jeder Übertragungseinheit unter dem gleichen Winkel zu dem festen Teil 98 ihres zugehörigen Antriebsmittels angeordnet (alternativ können diese auch unter verschiedenen Winkel angeordnet sein). Dieser Winkel kann dabei zwischen 90° und 180° liegen, wobei die Grenzwerte 90° und 180° ausgeschlossen und die Winkel nahe diesen Werten ungünstig sind, da in diesen Winkelbereichen die Verfahrwege des gekoppelten Ausgangsabschnitts 8 senkrecht zur Z-Richtung bis auf Null vermindert werden. Optimal ist die in Fig. 8 dargestellte Konfiguration mit einem Winkel von etwa 135°, bei dem neben dem langen Verfahrweg entlang der Z-Richtung auch noch maximale Verfahrwege in X- und Y-Richtung möglich sind. Der Verfahrweg in Z-Richtung ist im übrigen durch die Länge des festen Teils 98 des Antriebsmittels (bzw. des Verfahrwegs des Linearmotors) vorgegeben.

Die Bewegung des gekoppelten Ausgangsabschnitts 8 in X- und/oder Y-Richtung erfolgt dabei durch unterschiedliches Einstellen der Z-Koordinate der drei beweglichen Teile 94 bezüglich ihrer festen Teile 98. Fährt beispielsweise bei der in Fig. 8 gezeigten Stellung lediglich die links eingezeichnete Übertragungseinheit 2' nach oben, so bewegt sich der gekoppelte Ausgangsabschnitt 8 sowohl in der Z-Richtung nach oben als auch in der X-Richtung nach links. Durch entsprechendes Gegensteuern der beiden rechts eingezeichneten Übertragungseinheiten in der Z-Richtung nach unten, kann beispielsweise nur eine Bewegung des gekoppelten Ausgangsabschnitts 8 in der X-Richtung nach links erfolgen. Damit ist eine unabhängige Steuerung des gekoppelten Ausgangsabschnitts in alle drei Raumrichtungen möglich.

Die Erstreckungsrichtung der Übertragungseinheiten 2' verläuft entlang der Balken 46, 48 zwischen dem zweiten Abschnitt 6' und dem Ausgangsabschnitt 8 (bei der in Fig. 8 gezeigten, nicht ausgelenkten Stellung der Doppel-Biegegelenke 50, 52, 58 und 60).

## Patentansprüche

1. Bewegungsübertragungsvorrichtung zum Übertragen von wenigstens zwei eingangsseitigen (6) Bewegungskomponenten mit jeweils einem Bewegungsfreiheitsgrad in eine ausgangsseitige (82, 84) Bewegung mit wenigstens zwei Bewegungsfreiheitsgraden oder umgekehrt, welche pro eingangsseitigem (6) Bewegungsfreiheitsgrad eine Übertragungseinheit (2) umfaßt, wobei diese Übertragungseinheiten (2) über ihre jeweiligen Ausgangsabschnitte (8) funktionell parallel miteinander gekoppelt sind, jede Übertragungseinheit (2) einen festlegbaren ersten Abschnitt (4) und als Eingangsabschnitt einen an diesem ersten Abschnitt (4) über ein erstes Gelenkmittel (22, 26, 34; 24, 28, 36) angelenkten zweiten Abschnitt (6) umfaßt, der in Richtung des entsprechenden Bewegungsfreiheitsgrads der Übertragungseinheit (2) beweglich angelenkt ist, wobei der zweite Abschnitt (6) so ausgebildet ist, daß er über ein zweites Gelenkmittel (46, 50, 58; 48, 52, 60) ausgangsseitig eine freie Bewegung entlang der Bewegungsfreiheitsgrade der anderen Übertragungseinheiten (2) zuläßt, **dadurch gekennzeichnet, daß** das erste (22, 26, 34; 24, 28, 36) und das zweite (46, 50, 58; 48, 52, 60) Gelenkmittel als Biegegelenk ausgebildet sind und daß der zweite Abschnitt (6), das zweite Gelenkmittel (50; 52; 58; 60) und der Ausgangsabschnitt (8) derart ausgebildet sind, daß sie zusammen entlang des eingangsseitigen Bewegungsfreiheitsgrades der zugehörigen Übertragungseinheit (2) eine steife Struktur bilden.

2.  Bewegungsübertragungsvorrichtung nach Anspruch 1, welche drei Übertragungseinheiten (2) umfaßt zum Übertragen von drei eingangsseitigen (6) Bewegungskomponenten mit jeweils einem translatorischen Bewegungsfreiheitsgrad, in eine ausgangsseitige (82, 84) Bewegung mit drei translatorischen Bewegungsfreiheitsgraden.

3.  Bewegungsübertragungsvorrichtung nach Anspruch 1 oder 2, bei welcher die einzelnen Übertragungseinheiten (2) einstückig ausgebildet sind.

4.  Bewegungsübertragungsvorrichtung nach einem der vorhergehenden Ansprüche, bei welcher das erste Gelenkmittel (22, 26, 34; 24, 28, 36) und/oder das zweite Gelenkmittel (46, 50, 58; 48, 52, 60) nach Art eines Parallelogramm-Schwenkgelenks ausgebildet ist, wobei das Parallelogramm-Schwenkgelenk ein Balkenpaar (22, 24; 46, 48) mit jeweils einem Biegegelenk (26, 28, 34, 36; 50, 52, 58, 60) an allen vier Balkenenden umfaßt und die beiden Enden jeweils eines Balkens (22; 24; 46; 48) über die entsprechenden Biegegelenke (26, 28, 34, 36; 50, 52, 58, 60) jeweils mit dem ersten (4), dem zweiten (6) Abschnitt bzw. dem Ausgangsabschnitt (8) gekoppelt sind.

5.  Bewegungsübertragungsvorrichtung nach einem der vorhergehenden Ansprüche, bei welcher einzelne oder alle Biegegelenke (26; 28; 34; 36; 50; 52; 58; 60) als insbesondere Materialeinkerbungen ausgebildet sind, insbesondere mit einer kreisförmigen Geometrie.

6.  Bewegungsübertragungsvorrichtung nach einem der Ansprüche 2 bis 5, bei welcher die zweiten Gelenkmittel (50; 52; 58; 60) als Doppel-Biegegelenke ausgebildet sind, wobei ein Doppel-Biegegelenk zwei über ein Belastungsverteilungsmittel (62) funktionell seriell miteinander gekoppelte Biegegelenke (54, 56) umfaßt, die jeweils eine Schwenkbewegung in unterschiedliche Richtung ermöglichen.

7.  Bewegungsübertragungsvorrichtung nach einem der vorhergehenden Ansprüche, bei welcher die Übertragungseinheiten (2) plattenartig ausgebildet sind.

8.  Bewegungsübertragungsvorrichtung nach einem der Ansprüche 4 bis 7, bei welcher der erste Abschnitt (4) und/oder der Ausgangsabschnitt (8) einer Übertragungseinheit (2) balkenförmig oder plattenförmig ausgebildet sind, der zweite Abschnitt (6) einen ersten und einen zweiten Schenkelabschnitt (30, 32) umfaßt, die unter einem bestimmten Winkel, insbesondere senkrecht zueinander angeordnet sind, eine erste Seitenfläche (10) des ersten Abschnitts (4) über ein erstes Parallelogramm-Schwenkgelenk (22, 26, 34, 24, 28, 36) mit dem ersten Schenkelabschnitt (30) des zweiten Abschnitts (6) und der zweite Schenkelabschnitt (32) des zweiten Abschnitts (6) über ein zweites Parallelogramm-Schwenkgelenk (46, 50, 58, 52, 48, 60) mit dem Ausgangsabschnitt (8) derart gekoppelt ist, daß das erste (22, 26, 34, 24, 28, 36) und das zweite (46, 50, 58, 52, 48, 60) Parallelogramm-Schwenkgelenk unter einem bestimmten Winkel, insbesondere orthogonal zueinander ausgerichtet sind.

9.  Bewegungsübertragungsvorrichtung nach Anspruch 8, bei welcher das Balkenpaar (22, 24) des erstes Parallelogramm-Schwenkgelenks (22, 26, 34, 24, 28, 36) zwei gegenüberliegende Seitenflächen (12, 16) des ersten Abschnitts (4) und das Balkenpaar (46, 48) des zweiten Parallelogramm-Schwenkgelenks (46, 50, 58, 52, 48, 60) die beiden anderen gegenüberliegenden Seitenflächen (10, 14) des ersten Abschnitts (4) sowie den ersten Schenkelabschnitt (30) des zweiten Abschnitts (6) umgreifen.

10. Bewegungsübertragungsvorrichtung nach einem der vorhergehenden Ansprüche, bei welcher in jeder Übertragungseinheit (2) eine mechanische Sperre (38, 40; 64, 66) vorgesehen ist, welche den Bewegungsbereich des zweiten Abschnitts (6) bezüglich des ersten Abschnitts (4) und/oder des zweiten Abschnitts (6) bezüglich des Ausgangsabschnitts (8) entlang des zugehörigen Bewegungsfreiheitsgrads in beiden Richtungen einschränkt.

11. Bewegungsübertragungsvorrichtung nach einem der vorhergehenden Ansprüche, bei welcher die einzelnen Übertragungseinheiten (2) mittels einer Funkenerosionsbearbeitung, insbesondere einer Draht-Funkenerosionsbearbeitung hergestellt sind.

12. Bewegungsübertragungsvorrichtung nach einem der Ansprüche 7 bis 11, bei welcher die beiden Biegegelenke (54, 56) der Doppel-Biegegelenke (50; 52; 58; 60) unter einem bestimmten Winkel zueinander ausgerichtet sind und jedes der beiden Biegegelenke (54, 56) bezüglich der Plattenfläche der zugehörigen Übertragungseinheit (2) um einen bestimmten Winkel verdreht ist.

13. Bewegungsübertragungsvorrichtung nach einem der Ansprüche 6 bis 12, bei welcher die Doppel-Biegegelenke (50; 52; 58; 60) so dimensioniert sind, daß sie neben der Schwenkbewegung noch eine Torsionsbewegung zulassen.

**14.** Bewegungsübertragungsvorrichtung nach einem der vorhergehenden Ansprüche, bei welcher die Masse der beweglichen Teile (6; 8; 22; 24; 28; 28; 34; 36; 46; 48; 50; 52; 58; 60) einer Übertragungseinheit (2) gewichtsmäßig minimiert ist.

**15.** Bewegungsübertragungsvorrichtung nach einem der vorhergehenden Ansprüche, welche aus einer Titan-Legierung, aus einer Titan-Nickel-Legierung, aus Stahl, aus einer Stahl-Legierung, aus Edelstahl, aus Aluminium, aus einer Aluminium-Legierung, aus Kupfer, aus einer Kupfer-Legierung, einer Keramik oder einem Kunststoff hergestellt ist.

**16.** Positioniervorrichtung mit einer Bewegungsübertragungsvorrichtung nach einem der vorhergehenden Ansprüche, bei welcher jede Übertragungseinheit (2) über ihren Eingangsabschnitt (6) mit einem Antriebsmittel (72) zum Antreiben dieses Eingangsabschnitts (6) in Richtung des zugehörigen Bewegungsfreiheitsgrads gekoppelt ist.

**17.** Positioniervorrichtung nach Anspruch 16, bei welcher das Antriebsmittel (72) ein elektromagnetischer Aktuator, ein piezoelektrischer Aktuator oder ein anderer elektromotorischer Präzisionsantrieb zur Erzeugung einer Linearbewegung ist, insbesondere gekoppelt mit einem Positionsmeßmittel.

**18.** Positioniervorrichtung nach Anspruch 16 oder 17, welche als Feinpositioniervorrichtung ausgebildet und/oder über die ersten Abschnitte (4) jeder Übertragungseinheit (2) mit einer Makropositioniervorrichtung funktionell seriell gekoppelt ist.

**19.** Positioniervorrichtung nach einem der Ansprüche 16 bis 18, bei welcher die Antriebsmittel (72) von einem Steuerungsmittel mit Korrekturalgorithmus gesteuert werden, wobei der Korrekturalgorithmus derart ausgestaltet ist, daß bei Antreiben des Ausgangs (82, 84) der Bewegungsübertragungsvorrichtung entlang einer bestimmten Richtung die aufgrund der Biegegelenke (26; 28; 34; 36; 50; 52; 58; 60) hervorgerufene(n) zwangsgekoppelte(n) Translationsbewegung(en) durch entsprechendes Antreiben eines oder mehrerer der anderen Antriebsmittel (72) kompensiert wird bzw. werden.

**20.** Positioniervorrichtung nach einem der Ansprüche 16 bis 19, welche derart im Arbeitsraum ausgerichtet ist, daß bei einer ausgangsseitigen (82, 84) Bewegung der Bewegungsübertragungsvorrichtung allein entlang der in Schwerkraftrichtung ausgerichteten Z-Richtung alle Antriebsmittel (72) im wesentlichen gleich beansprucht sind.

**21.** Positioniervorrichtung nach einem der Ansprüche 16 bis 19, welche derart im Arbeitsraum ausgerichtet ist, daß bei einer ausgangsseitigen (82, 84) Bewegung der Bewegungsübertragungsvorrichtung allein entlang der in Schwerkraftrichtung ausgerichteten Z-Richtung lediglich ein Antriebsmittel (72) beansprucht ist.

**22.** Positioniervorrichtung nach Anspruch 21, bei welcher das Antriebsmittel (72) für die Bewegung entlang der Z-Richtung mit einem gegen die Schwerkraft vorgespannten passiven Mittel, insbesondere einem Federmittel funktionell parallel gekoppelt und/oder leistungsmäßig stärker ausgebildet ist als die übrigen Antriebsmittel (72) .

**23.** Meßvorrichtung zum Messen einer Bewegung im Raum mit einer Bewegungsübertragungsvorrichtung nach einem der Ansprüche 1 bis 15, deren Eingang der Ausgang (82, 84) der Bewegungsübertragungsvorrichtung ist, bei der die Eingangsabschnitte (6) jeder Übertragungseinheit (2) mit entsprechenden Meßmitteln gekoppelt sind, die eine Positionsmessung entlang des zugehörigen Bewegungsfreiheitsgrades des entsprechenden Eingangsabschnitts (6) ermöglichen.

**24.** Verwendung einer Positionier- oder Meßvorrichtung nach einem der Ansprüche 16 bis 23 auf dem Gebiet der Werkstückbearbeitung, Funkenerosionsbearbeitung, der elektrochemischen Bearbeitung, der Halbleiterfertigung, der Fertigung von opto-elektronischen Verbindungsbauelementen und Mikrosystemen, der Robotik, als Kraftmesser und/oder Joystick mit Kraftrückführung.

**25.** Bewegungsübertragungsvorrichtung zum Übertragen von drei eingangsseitigen Bewegungskomponenten mit jeweils einem Bewegungsfreiheitsgrad in eine ausgangsseitige Bewegung mit drei Bewegungsfreiheitsgraden oder umgekehrt, welche drei Übertragungseinheiten (2') mit jeweils einem Eingangs- (6') und einem Ausgangsabschnitt (8) umfaßt, die über ihre Ausgangsabschnitte (8) funktionell parallel miteinander gekoppelt sind, jede Übertragungseinheit (2') eine Erstreckungsrichtung von ihrem jeweiligen Eingangsabschnitt (6') zu ihrem jeweiligen Ausgangsabschnitt (8) aufweist und als Biegegelenke (50, 52, 58, 60) ausgebildete Gelenkmittel derart umfaßt, daß ihr jeweiliger Ausgangsabschnitt (8) freie Bewegungen senkrecht zu ihrer Erstreckungsrichtung zuläßt, wobei die Eingangsabschnitte (6') der Übertragungseinheiten (2') derart ausgestaltet sind, daß die jeweilige eingangsseitige Bewegung in einem Winkel zur Erstreckungsrichtung eingeleitet wird, **dadurch gekennzeichnet, daß** die Biegegelenke (50, 52, 58, 60) nach Art von Parallelogramm-Schwenkgelenken ausgebildet sind, wobei jedes Parallelogramm-Schwenkgelenk ein Balkenpaar (46, 48) mit jeweils einem Biegegelenk (50, 52, 58, 60) an allen vier Balkenenden umfaßt und die beiden Enden jeweils eines Balkens (46; 48) über die entsprechenden Biegegelenke (50, 52, 58, 60) jeweils mit dem Eingangsabschnitt (6') und dem Ausgangsabschnitt (8) gekoppelt sind.

26. Bewegungsübertragungsvorrichtung nach Anspruch 25, bei welcher die Eingangsabschnitte (6') der Übertragungseinheiten (2') derart ausgebildet sind, daß die jeweiligen eingangsseitigen Bewegungen parallel zueinander eingeleitet werden.

27. Bewegungsübertragungsvorrichtung nach Anspruch 25 oder 26, bei welcher die Übertragungseinheiten (2') gemäß den Merkmalen der Unteransprüche 5, 6, 7, 11, 12, 13, 14 oder 15 ausgebildet sind.

28. Positioniervorrichtung mit einer Bewegungsübertragungsvorrichtung nach einem der Ansprüche 25 bis 27, bei welcher jede Übertragungseinheit (2') über ihren Eingangsabschnitt (6') mit einem Antriebsmittel (96) zum Antreiben dieses Eingangsabschnitts (9') entlang des zugehörigen eingangsseitigen Bewegungsfreiheitsgrads gekoppelt ist.

29. Positioniervorrichtung nach Anspruch 28, bei welchem die Antriebsmittel (96) zusammen mit den zugehörigen Eingangsabschnitten (6') nach Art von Linearmotoren ausgebildet sind.


**Claims**

1. Movement transmission apparatus for the transmission of at least two input-side (6) movement components with respectively one degree of freedom of movement in an output-side (82, 84) movement with at least two degrees of freedom of movement, or vice versa, comprising a transmission unit (2) for each input side (6) degree of freedom of movement, whereby these transmission units (2), by means of their respective output sections (8) are coupled with one another in a functionally parallel manner, each transmission unit (2) includes a fixable first section (4) and, as input section, a second section (6) which is hingedly connected to the first section (4) by a first pivot means (22, 26, 34; 24, 28, 36), which second section (6) is hingedly connected for motion in the direction of the corresponding degree of freedom of movement of the transmission unit (2), whereby the second section (6) is so constructed, that it, by means of a second pivot means (46, 50, 58; 48, 52, 60) is permitted on the output-side free travel along the degrees of freedom of movement of the other transmission units (2), **characterized in that** the first (22, 26, 34; 24, 28, 36) and the second (46, 50, 58; 48, 52, 60) pivot means are constructed as flexural pivots and that the second section (6), the second pivot means (50; 52; 58; 60) and the output section (8) are so constructed that they together form a stiff structure along the input-side degree of freedom of movement of the associated transmission unit (2).

2. Movement transmission apparatus according to claim 1, further comprising three transmission units (2) for the transmission of three input-side (6) movement components with respectively one translatory degree of freedom of movement to one output-side (82, 84) movement with three translatory degrees of freedom of movement.

3. Movement transmission apparatus according to claim 1 or 2, in which each of the individual transmission units (2) are constructed of one piece.

4. Movement transmission apparatus according to one of the preceding claims, wherein the first pivot means (22, 26, 34; 24, 28, 36) and/or the second pivot means (46, 50, 58; 48, 52, 60) are constructed as a type of parallelogram pivot, whereby the parallelogram pivot comprises one pair of bars (22, 24; 46, 48) with respectively one flexural pivot (26, 28, 34, 36; 50, 52, 58, 60) on all four bar ends, and the two ends of a bar (22; 24; 46; 48) are coupled with the first (4) section and the second (6) section, this is to say the output section (8), respectively, by means of the corresponding flexural pivots (26, 28, 34, 36; 50, 52, 58, 60).

5. Movement transmission apparatus according to one of the preceding claims, wherein some or all of the flexural pivots (26, 28, 34, 36;, 50, 52, 58, 60) are constructed in particular as material notches, especially with a circular shaped geometry.

6. Movement transmission apparatus according to one of claims 2 to 5, wherein the second pivot mean (50; 52; 58; 60) are constructed as double flexural pivots, wherein the double flexural pivot comprises a first and second flexural pivot (54, 56) which are coupled with each other in a functionally serial manner by means of a load apportioning means (62), each flexural pivot enabling a pivotal motion in a different direction.

7. Movement transmission apparatus according to one of the preceding claims, wherein the transmission units (2) are designed in a plate-like shape.

8. Movement transmission apparatus according to one of claims 4 to 7, wherein the first section (4) and/or the output section (8) of a transmission unit (2) are designed in bar or plate shapes, wherein the second section (6) comprises a first and a second leg section (30, 32) which are disposed to one another in a specified angle, especially at a right angle, a first side surface (10) of the first section (4) is so coupled with the first leg section (30) of the second section (6) by means of a first parallelogram pivot (22, 26, 34, 24, 28, 36) and the second leg section (32) of the second section (6) is so coupled with the output section (8) by means of a second parallelogram pivot (46, 50, 58, 52, 48, 60) that the first (22, 26, 34, 24, 28, 36) and the second (46, 50, 58, 52, 48, 60) parallelogram pivot are aligned with one another at a defined angle, especially being orthogonal to one another.

9. Movement transmission apparatus according to claim 8, in which the bar pair (22, 24) of the first parallelogram pivot (22, 26, 34, 24, 28, 36) encloses two oppositely disposed side surfaces (12, 16) of the first section (4), and the bar pair (46, 48) of the second parallelogram pivot (46, 50, 58, 52, 48, 60) encloses the other oppositely disposed side surfaces (10, 14) of the first section (4) and encloses also the first leg section (30) of the second section (6).

10. Movement transmission apparatus according to one of the preceding claims, wherein a mechanical detent (38, 40; 64, 66) is provided in each transmission unit (2) which limits the movement range of the second section (6) relative to the first section (4) and/or the second section (6) relative to the output section (8), said limitation being along the associated degree of freedom of movement in both directions.

11. Movement transmission apparatus according to one of the preceding claims, wherein the individual transmission units (2) are machined by means of a spark erosion process, especially a wire-spark erosion process.

12. Movement transmission apparatus according to one of claims 7 to 11, wherein the two flexural pivots (54, 56) of the double flexural pivots (50; 52; 58; 60) are aligned at a defined angle to one another and each of the two flexural pivots (54, 56) is set at a defined angle relative to the plate surface of the associated transmission unit (2).

13. Movement transmission apparatus according to one of claims 6 to 12, wherein the double flexural pivots (50; 52; 58; 60) are so dimensioned that they allow besides the pivotal motion, also a twisting movement.

14. Movement transmission apparatus according to one of the preceding claims, wherein the weight of the movable parts (6; 8; 22; 24; 28; 34; 36; 46; 48; 50; 52; 58; 60) of a transmission unit (2) is minimized.

15. Movement transmission apparatus according to one of the preceding claims, which is manufactured from a titanium alloy, a titanium-nickel alloy, steel, a steel alloy, stainless steel, aluminum, an aluminum alloy, copper, a copper alloy, ceramic, or plastic.

16. Positioning apparatus comprising a movement transmission apparatus according to one of the preceding claims, wherein each transmission unit (2), by means of its input section (6) is coupled with a driving means (72) for the activation of this input section (6) in the direction of the associated degree of freedom of movement.

17. Positioning apparatus according to claim 16, in which the driving means (72) is an electromagnetic actuator, a piezoelectric actuator or another electromotor-like precision drive for the production of a linear movement, especially coupled with a position measurement means.

18. Positioning apparatus according to claim 16 or 17, which is constructed as a fine-positioning apparatus and/or, through the first sections (4) of all transmission units (2) is coupled with a macro-positioning apparatus in a functionally serial manner.

19. Positioning apparatus according to one of claims 16 to 18, wherein the driving means (72) is regulated by a control means with correction algorithms, whereby the correction algorithms are formulated so that, during driving of the output (82, 84) of the movement transmission apparatus along a specified direction, the translatory movement(s) evoked by the forced coupling of the flexural pivots (26; 28; 34; 36; 50; 52; 58; 60) is (are) compensated by correspondingly driving of one or several of the other driving means (72).

20. Positioning apparatus according to one of claims 16 to 19, which is so aligned in a operating space, that during a output-side (82, 84) movement of the movement transmission apparatus solely along the Z-direction, which is in the gravity direction, all driving means (72) are essentially equally under load.

21. Positioning apparatus according to one of claims 16 to 20, which is so aligned in a workroom, that during an output-side (82, 84) movement of the movement transmission apparatus solely along the Z-direction, which is in the gravity direction, essentially one single driving means (72) is under load.

22. Positioning apparatus according to claim 21, wherein the driving means (72) for the movement along the Z-direction is coupled in a functionally parallel manner with a spring means, and/or is, in respect to power and capacity, built stronger than the other driving means.

**23.** Measurement device for the measurement of a movement in space comprising a movement transmission apparatus according to one of claims 1 to 15, the input of which device is the output section (6) of the movement transmission apparatus, and wherein the input side sections (6) of each transmission unit (2) are coupled with corresponding measurement means, which enable a measurement of position along the associated degree of freedom of the corresponding input section (6).

**24.** Use of a positioning apparatus or a measuring device according to one of claims 16 to 23 in the fields of work piece machining, spark-erosion machining, electrochemical material working, the making of semiconductors, the manufacture of optical-electronic connection construction elements, micro-system, the robotics, usage as power meter, and/or joystick with power feedback.

**25.** Movement transmission apparatus for the transmission of three input side movement components with respectively one degree of freedom of movement into an output-side movement with three degrees of freedom of movement, or vice versa, which comprises three transmission units (2') with respectively one input section (6) and one output section (8) which, by means of their output sections (8) are coupled with one another in a functionally serial manner, each transmission unit (2') exhibiting an extension direction from its respective input section (6') to its respective output section (8) and including pivot means constructed as flexural pivots (50, 52, 58, 60) of such a kind that its respective output section (8) allows free movement perpendicular to its extension direction, whereby the input sections (6') of the transmission units (2') are so designed that the respective input-side movement is introduced at an angle to the extension direction, **characterized in that** the flexural pivots (50, 52, 58, 60) are designed as a type of parallelogram pivot, whereby each parallelogram pivot includes a bar pair (46, 48) with respectively one flexural pivot (50, 52, 58, 60) on all four bar ends, and the two ends, respectively, of one bar (46; 48), by means of the corresponding flexural pivots (50, 52, 58, 60) are coupled with the input section (6') and the output section (8), respectively.

**26.** Movement transmission apparatus according to claim 25, in which the input sections (6') of the transmission units (2) are so constructed, that the respective input-side movements are introduced parallel to one another.

**27.** Movement transmission apparatus according to claim 25 or 26, in which the transmission units (2') are constructed in accordance with the features of the dependent claims 5, 6, 7, 11, 12, 13, 14 or 15.

**28.** Positioning apparatus comprising a movement transmission apparatus according to one of claims 25 to 27, in which each transmission unit (2'), by means of its input section (6') is coupled with a driving means (96) for the driving of its input section (9') along the associated input-side degree of freedom of movement.

**29.** Positioning apparatus according to claim 28, wherein the driving means (96) together with the associated input sections (6') are designed in the style of linear motors.

## Revendications

**1.** Dispositif de transmission de mouvement pour la conversion d'au moins deux composants de mouvement côté entrée (6) avec respectivement un degré de liberté de mouvement en un mouvement côté sortie (82, 84) avec au moins deux degrés de liberté de mouvement ou inversement, lequel comprend une unité de transmission (2) par degré de liberté de mouvement côté entrée (6), ces unités de transmission (2) étant couplées parallèlement entre elles au plan fonctionnel par leurs parties de sortie (8) respectives, chaque unité de transmission (2) comprenant une première partie (4) pouvant être fixée et comme partie d'entrée une seconde partie (6) articulée sur cette première partie (4) par un premier moyen d'articulation (22, 26, 34 ; 24, 28, 36), lequel est articulé de façon mobile en direction du degré de liberté de mouvement correspondant de l'unité de transmission (2), la seconde partie (6) étant réalisée de telle sorte qu'elle autorise par un second moyen d'articulation (46, 50, 58 ; 48, 52, 60) côté sortie un mouvement libre le long des degrés de liberté de mouvement des autres unités de transmission (2), **caractérisé en ce que** le premier moyen d'articulation (22, 26, 34 ; 24, 28, 36) et le second moyen d'articulation (46, 50, 58 ; 48, 52, 60) sont conçus comme articulation de pliage et **en ce que** la seconde partie (6), le second moyen d'articulation (50, 52 ; 58, 60) et la partie de sortie (8) sont conçus de telle sorte qu'ils forment ensemble une structure rigide le long du degré de liberté de mouvement côté entrée de l'unité de transmission correspondante (2) .

**2.** Dispositif de transmission de mouvement selon la revendication 1, qui comprend trois unités de transmission (2) pour la conversion de trois composants de mouvement côté entrée (6), avec respectivement un degré de liberté de mouvement de translation, en un mouvement côté sortie (82, 84) avec trois degrés de liberté de mouvement de translation.

**3.** Dispositif de transmission de mouvement selon la revendication 1 ou 2, sur lequel les unités de transmission (2) individuelles sont réalisées d'une seule pièce.

4. Dispositif de transmission de mouvement selon l'une quelconque des revendications précédentes, sur lequel le premier moyen d'articulation (22, 26, 34 ; 24, 28, 36) et/ou le second moyen d'articulation (46, 50, 58 ; 48, 52, 60) est réalisé à la façon d'une articulation pivotante à parallélogramme, l'articulation pivotante à parallélogramme comprenant une paire de barres (22, 24 ; 46, 48) avec respectivement une articulation de pliage (26, 28, 34, 36 ; 50, 52, 58, 60) sur l'ensemble des quatre extrémités de barre et les deux extrémités de respectivement une barre (22 ; 24 ; 46 ; 48) étant couplées au moyen des articulations de pliage (26, 28, 34, 36 ; 50, 52, 58, 60) correspondantes respectivement avec la première (4) partie, la seconde (6) partie ou la partie de sortie (8).

5. Dispositif de transmission de mouvement selon l'une quelconque des revendications précédentes, sur lequel des articulations de pliage (26 ; 28 ; 34 ; 36 ; 50 ; 52 ; 58 ; 60) individuelles ou l'ensemble de ces articulations étant réalisées sous la forme en particulier d'entailles de matériau, en particulier avec une géométrie circulaire.

6. Dispositif de transmission de mouvement selon l'une quelconque des revendications 2 à 5, sur lequel les seconds moyens d'articulation (50 ; 52 ; 58 ; 60) sont conçus comme des doubles articulations de pliage, une double articulation de pliage comprenant des articulations de pliage (54, 56) couplées entre elles en série au plan fonctionnel au moyen d'un moyen de répartition de charge (62), lesquelles permettent respectivement un mouvement de pivotement dans une direction différente.

7. Dispositif de transmission de mouvement selon l'une quelconque des revendications précédentes, sur lequel les unités de transmission (2) sont conçues en forme de plaques.

8. Dispositif de transmission de mouvement selon l'une quelconque des revendications 4 à 7, sur lequel la première partie (4) et/ou la partie de sortie (8) d'une unité de transmission (2) sont conçues en forme de barres ou de plaques, la seconde partie (6) comprend une première et une seconde parties de branche (30, 32) qui sont disposées en formant un angle défini, en particulier perpendiculaire entre elles, une première face latérale (10) de la première partie (4) étant couplée au moyen d'une première articulation pivotante à parallélogramme (22, 26, 34, 24, 28, 36) avec la première partie de branche (30) de la seconde partie (6) et la seconde partie de branche (32) de la seconde partie (6) étant couplée par une seconde articulation pivotante à parallélogramme (46, 50, 58, 52, 48, 60) avec la partie de sortie (8) de telle sorte que la première (22, 26, 34, 24, 28, 36) et la seconde (46, 50, 58, 52, 48, 60) articulations pivotantes à parallélogramme sont orientées en formant un angle défini, en particulier un angle droit l'une par rapport à l'autre.

9. Dispositif de transmission de mouvement selon la revendication 8, sur lequel la paire de barres (22, 24) de la première articulation pivotante à parallélogramme (22, 26, 34, 24, 28, 36) entoure deux faces latérales (12, 16) opposées de la première partie (4) et la paire de barres (46, 48) de la seconde articulation pivotante à parallélogramme (46, 50, 58, 52, 48, 60) entoure les deux autres faces latérales (10, 14) opposées de la première partie (4) et la première partie de branche (30) de la seconde partie (6).

10. Dispositif de transmission de mouvement selon l'une quelconque des revendications précédentes, sur lequel il est prévu dans chaque unité de transmission (2) un blocage (38, 40 ; 64, 66) mécanique qui limite la zone de mouvement de la seconde partie (6) par rapport à la première partie (4) et/ou la seconde partie (6) par rapport à la partie de sortie (8) le long du degré de liberté de mouvement spécifique dans les deux directions.

11. Dispositif de transmission de mouvement selon l'une quelconque des revendications précédentes, sur lequel les unités de transmission (2) individuelles sont fabriquées au moyen d'un usinage par électroérosion, en particulier d'un usinage par électroérosion à fil.

12. Dispositif de transmission de mouvement selon l'une quelconque des revendications 7 à 11, sur lequel les deux articulations de pliage (54, 56) des doubles articulations de pliage (50 ; 52 ; 58 ; 60) sont orientées l'une par rapport à l'autre en formant un angle défini et chacune des deux articulations de pliage (54, 56) est tournée d'un angle défini par rapport à là surface de plaque de l'unité de transmission (2) spécifique.

13. Dispositif de transmission de mouvement selon l'une quelconque des revendications 6 à 12, sur lequel les doubles articulations de pliage (50 ; 52 ; 58 ; 60) sont dimensionnées de telle sorte qu'elles autorisent également un mouvement de torsion parallèlement au mouvement de pivotement.

14. Dispositif de transmission de mouvement selon l'une quelconque des revendications précédentes, sur lequel la masse des parties mobiles (6 ; 8 ; 22 ; 24 ; 28 ; 28 ; 34 ; 36 ; 46 ; 48 ; 50 ; 52 ; 58 ; 60) d'une unité de transmission (2) est minimisée au niveau du poids.

**15.** Dispositif de transmission de mouvement selon l'une quelconque des revendications précédentes, qui est fabriqué dans un alliage de titane, dans un alliage de titane-nickel, en acier, dans un alliage d'acier, en acier fin, en aluminium, dans un alliage d'aluminium, en cuivre, dans un alliage de cuivre, une céramique ou un matériau synthétique.

**16.** Dispositif de positionnement avec un dispositif de transmission de mouvement selon l'une quelconque des revendications précédentes, sur lequel chaque unité de transmission (2) est couplée par sa partie d'entrée (6) avec un moyen d'entraînement (72) pour l'entraînement de cette partie d'entrée (6) en direction du degré de liberté de mouvement spécifique.

**17.** Dispositif de positionnement selon la revendication 16, sur lequel le moyen d'entraînement (72) est un actionneur électromagnétique, un actionneur piézo-électrique ou un autre entraînement de précision par moteur électrique pour générer un mouvement linéaire, en particulier couplé avec un moyen de mesure de position.

**18.** Dispositif de positionnement selon la revendication 16 ou 17, qui est conçu comme dispositif de positionnement fin et/ou est couplé en série au plan fonctionnel par les premières parties (4) de chaque unité de transmission (2) avec un dispositif de macropositionnement.

**19.** Dispositif de positionnement selon l'une quelconque des revendications 16 à 18, sur lequel les moyens d'entraînement (72) sont commandés par un moyen de commande avec algorithme de correction, l'algorithme de correction étant conçu de telle sorte que, en cas d'entraînement de la sortie (82, 84) du dispositif de transmission de mouvement le long d'une direction définie, le(s) mouvement(s) de translation couplé(s) de force et causé(s) en raison des articulations de pliage (26 ; 28 ; 34 ; 36 ; 50 ; 52 ; 58 ; 60) est(sont) compensé(s) par un entraînement approprié d'un ou de plusieurs des autres moyens d'entraînement (72).

**20.** Dispositif de positionnement selon l'une quelconque des revendications 16 à 19, qui est orienté dans l'espace de travail de telle sorte que, lors d'un mouvement côté sortie (82, 84) du dispositif de transmission de mouvement uniquement le long de la direction Z orientée dans le sens de la force de gravité, tous les moyens d'entraînement (72) sont sollicités sensiblement de façon identique.

**21.** Dispositif de positionnement selon l'une quelconque des revendications 16 à 19, qui est orienté dans l'espace de travail de telle sorte que, lors d'un mouvement côté sortie (82, 84) du dispositif de transmission de mouvement uniquement le long de la direction Z orientée dans le sens de la force de gravité, un seul moyen d'entraînement (72) est sollicité.

**22.** Dispositif de position selon la revendication 21, sur lequel le moyen d'entraînement (72) pour le déplacement le long de la direction Z est couplé en parallèle au plan fonctionnel avec un moyen passif prétendu contre la force de pesanteur, en particulier un moyen élastique et/ou est réalisé plus fort au niveau de la puissance que les autres moyens d'entraînement (72).

**23.** Dispositif de mesure pour la mesure d'un mouvement dans l'espace avec le dispositif de transmission de mouvement selon l'une quelconque des revendications 1 à 15, dont l'entrée est la sortie (82, 84) du dispositif de transmission de mouvement, sur lequel les parties d'entrée (6) de chaque unité de transmission (2) sont couplées avec des moyens de mesure correspondants qui permettent une mesure de position le long du degré de liberté de mouvement spécifique de la partie d'entrée (6) correspondante.

**24.** Utilisation d'un dispositif de positionnement ou d'un dispositif de mesure selon l'une quelconque des revendications 16 à 23 dans le secteur de l'usinage de pièce, de l'usinage par électroérosion, de l'usinage électrochimique, de la fabrication de semiconducteurs, de la fabrication de composants de liaison opto-électroniques et de microsystèmes, de la robotique, comme dynamomètre et/ou comme joystick avec recyclage de la force.

**25.** Dispositif de transmission de mouvement pour la transmission de trois composants de mouvement côté entrée avec respectivement un degré de liberté de mouvement en un mouvement côté sortie avec trois degrés de liberté de mouvement ou inversement, qui comporte trois unités de transmission (2') avec respectivement une partie d'entrée (6') et une partie de sortie (8), qui sont couplées entre elles en parallèle au plan fonctionnel par leurs parties de sortie (8), chaque unité de transmission (2') présentant une direction d'étirement depuis sa partie d'entrée (6') respective vers sa partie de sortie (8) respective et comprenant des moyens d'articulation conçus comme articulations de pliage (50, 52, 58, 60) de telle sorte que sa partie de sortie (8) respective autorise des mouvements libres perpendiculairement à sa direction d'étirement, les parties d'entrée (6') des unités de transmission (2') étant conçues de telle sorte que le mouvement côté entrée respectif est mis en oeuvre avec un angle par rapport à la direction d'étirement, **caractérisé en ce que** les articulations de pliage (50, 52, 58, 60) sont réalisées à la façon d'articulations pivotantes à parallélogramme, chaque articulation pivotante à parallélogramme comprenant une paire de barres (46, 48) avec respectivement une articulation de pliage (50, 52, 58, 60) sur l'ensemble des quatre extrémités de barre et les deux extrémités de respectivement une barre (46 ; 48) étant couplées par les articulations de pliage (50, 52, 58, 60) correspondantes respectivement avec la partie d'entrée (6') et la partie de sortie (8) .

26. Dispositif de transmission de mouvement selon la revendication 25, sur lequel les parties d'entrée (6') des unités de transmission (2') sont conçues de telle sorte que les mouvements côté entrée respectifs sont amorcés parallèlement entre eux.

27. Dispositif de transmission de mouvement selon la revendication 25 ou 26, sur lequel les unités de transmission (2') sont conçues selon les caractéristiques des sous-revendications 5, 6, 7, 11, 12, 13, 14 ou 15.

28. Dispositif de positionnement avec un dispositif de transmission de mouvement selon l'une quelconque des revendications 25 à 27, sur lequel chaque unité de transmission (2') est couplée par sa partie d'entrée (6') avec un moyen d'entraînement (96) pour l'entraînement de ces parties d'entrée (9') le long du degré de liberté de mouvement côté entrée respectif.

29. Dispositif de positionnement selon la revendication 28, sur lequel les moyens d'entraînement (96) sont réalisés conjointement avec les parties d'entrée (6') spécifiques à la façon de moteurs linéaires.

## FIG. 1a

## FIG. 1b

## FIG. 1c

## FIG. 1d

## FIG. 2

### FIG. 2a
### A-A

### FIG. 2b
### B-B

FIG. 3

FIG. 4

FIG. 5

<u>FIG. 6</u>

<u>FIG. 7</u>

$$K = \frac{M}{\alpha}$$

54;56

54;56

26

FIG. 8